(19) Europäisches Patentamt / European Patent Office / Office européen des brevets

(11) **EP 3 340 620 B1**

(12) **EUROPEAN PATENT SPECIFICATION**

(45) Date of publication and mention of the grant of the patent:
**02.10.2024 Bulletin 2024/40**

(21) Application number: **15902361.3**

(22) Date of filing: **04.12.2015**

(51) International Patent Classification (IPC):
**H04N 19/105** *(2014.01)*  **H04N 19/503** *(2014.01)*
**H04N 19/159** *(2014.01)*  **H04N 19/176** *(2014.01)*
**H04N 19/182** *(2014.01)*  **H04N 19/513** *(2014.01)*
**H04N 19/537** *(2014.01)*  *H04N 19/573* *(2014.01)*

(52) Cooperative Patent Classification (CPC):
**H04N 19/159; H04N 19/105; H04N 19/176;**
**H04N 19/182; H04N 19/503; H04N 19/513;**
**H04N 19/537;** H04N 19/573

(86) International application number:
**PCT/KR2015/013207**

(87) International publication number:
**WO 2017/034089 (02.03.2017 Gazette 2017/09)**

(54) **INTER PREDICTION MODE-BASED IMAGE PROCESSING METHOD AND APPARATUS THEREFOR**

AUF INTERPRÄDIKTIONMODUS BASIERENDES BILDVERARBEITUNGSVERFAHREN UND VORRICHTUNG DAFÜR

PROCÉDÉ DE TRAITEMENT D'IMAGE BASÉ SUR UN MODE D'INTER-PRÉDICTION ET APPAREIL ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2015 US 201562208809 P**

(43) Date of publication of application:
**27.06.2018 Bulletin 2018/26**

(73) Proprietor: LG Electronics Inc.
**Yeongdeungpo-gu**
**Seoul 07336 (KR)**

(72) Inventors:
• **PARK, Naeri**
  **Seoul 06772 (KR)**
• **SEO, Jungdong**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(56) References cited:
WO-A1-2017/036399      US-A1- 2008 267 296
US-A1- 2012 189 057    US-A1- 2014 049 605
US-A1- 2015 003 521    US-A1- 2015 229 961

• ALSHINA E ET AL: "Known tools performance investigation for next generation video coding", 52. VCEG MEETING; 19-6-2015 - 26-6-2015; WARSAW; (VIDEO CODING EXPERTS GROUP OF ITU-T SG.16),, no. VCEG-AZ05_r1, 25 June 2015 (2015-06-25), XP030003882
• ALSHINA A ET AL: "Bi-directional optical flow", no. JCTVC-C204, 3 October 2010 (2010-10-03), XP030007911, Retrieved from the Internet <URL:http://wftp3.itu.int/av-arch/jctvc-site/>
• QUALCOMM: "Harmonization and improvement for BIO", ITU-T SG16 MEETING; 12-10-2015 - 23-10-2015; GENEVA,, no. T13-SG16-C-1045, 30 September 2015 (2015-09-30), XP030100753

EP 3 340 620 B1

• GARY J. SULLIVAN ET AL: "Overview of the High Efficiency Video Coding (HEVC) Standard", IEEE TRANSACTIONS ON CIRCUITS AND SYSTEMS FOR VIDEO TECHNOLOGY, vol. 22, no. 12, 1 December 2012 (2012-12-01), US, pages 1649 - 1668, XP055388661, ISSN: 1051-8215, DOI: 10.1109/TCSVT.2012.2221191

**Description**

[Technical Field]

The present invention relates to a method of processing a still image or moving image and, more particularly, to a method of encoding/decoding a still image or moving image based on an inter-prediction mode and an apparatus supporting the same.

[Background Art]

Compression encoding means a series of signal processing techniques for transmitting digitized information through a communication line or techniques for storing information in a form suitable for a storage medium. The medium including a picture, an image, audio, etc. may be a target for compression encoding, and particularly, a technique for performing compression encoding on a picture is referred to as video image compression.

Next-generation video contents are supposed to have the characteristics of high spatial resolution, a high frame rate and high dimensionality of scene representation. In order to process such contents, a drastic increase in the memory storage, memory access rate and processing power will result.

Accordingly, it is required to design a coding tool for processing next-generation video contents efficiently.

The following pieces of prior art: H

- ALSHINA E ET AL: "Known tools performance investigation for next generation video coding", 52. VCEG MEETING; 19-26 June 2015; WARSAW; (VIDEO CODING EXPERTS GROUP OF ITU-T SG.16), no. VCEG-AZ05_r1, 25 June 2015, and
- ALSHIN A ET AL: "Bi-directional optical flow", 3. JCT-VC MEETING; 94. MPEG MEETING; 7-15 Oct. 2010; GUANGZHOU; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-S, no. JCTVC-C204, 3 October 2010,

disclose bi-directional optical flow (BIO), as a tool to refine motion vectors at the decoding end, thereby improving the efficiency of video coding. Both documents, however, limit their teaching to scenarios in which one of the reference frames precedes the current frame and the other follows it.

[Disclosure]

[Technical Problem]

In the existing compression technology of a still image or moving image, motion prediction is performed in a prediction block unit when inter-prediction is performed. There is a problem in that prediction precision is deteriorated although prediction blocks of various sizes or shapes are supported in order to search for an optimal prediction block for a current block.

In order to solve this problem, an object of the present invention proposes a method of processing an image by performing motion compensation in a pixel unit upon performing the inter-prediction.

Furthermore, an object of the present invention proposes a method of improving a reference block in a pixel unit by applying an optical flow derivation method upon performing the motion compensation of inter-prediction.

Technical objects to be achieved by the present invention are not limited to the aforementioned technical objects, and other technical objects not described above may be evidently understood by a person having ordinary skill in the art to which the present invention pertains from the following description.

[Technical Solution]

The invention is addressed to a method for processing an image as defined by independent claim 1 and a corresponding apparatus as defined by independent claim 8.

Further optional aspects are defined in the dependent claims.

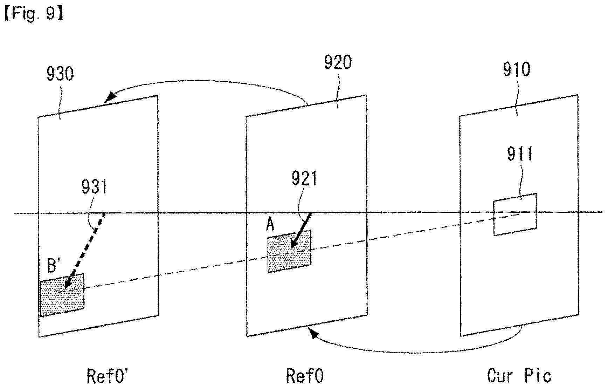

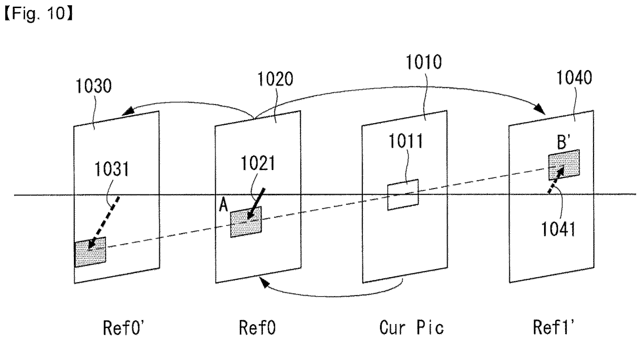

The invention is disclosed in the section relative to "Embodiment 5" with figures 9 and 10 and with the other passages of the description referred to in the section disclosing "Embodiment 5". Although they are referred to as "embodiments" the other "embodiments" are to be understood as mere examples, as they do not fall under the scope of the independent claims. More in general, any use of the expressions "embodiment(s)" and "invention" are to be understood to refer to examples, except when referring to elements of "Embodiment 5".

[Description of Drawings]

The accompanying drawings, which are included herein as a part of the description for help understanding the present invention, provide embodiments of the present invention, and describe the technical features of the present invention with the description below.

FIG. 1 is illustrates a schematic block diagram of an encoder in which the encoding of a still image or video signal is performed, as an embodiment to which the present invention is applied.

FIG. 2 illustrates a schematic block diagram of a decoder in which decoding of a still image or video signal is performed, as an embodiment to which the present invention is applied.

FIG. 3 is a diagram for describing a split structure of a coding unit that may be applied to the present invention.

FIG. 4 is a diagram for describing a prediction unit that may be applied to the present invention.

FIG. 5 is an embodiment to which the present invention may be applied and illustrates a bi-directional prediction method of a picture having a steady motion.

FIGS. 6 to 10 are diagrams illustrating a method of performing motion compensation in a pixel unit according to an embodiment of the present invention.

FIG. 11 is a diagram more specifically illustrating an inter-prediction unit according to an embodiment of the present invention.

FIGS. 12 to 16 are diagrams illustrating a method of processing an image based on inter-prediction according to an embodiment of the present invention.

[Mode for Invention]

Hereinafter, a preferred embodiment of the present invention will be described by reference to the accompanying drawings. The description that will be described below with the accompanying drawings is to describe exemplary embodiments of the present invention, and is not intended to describe the only embodiment in which the present invention may be implemented. The description below includes particular details in order to provide perfect understanding of the present invention. However, it is understood that the present invention may be embodied without the particular details to those skilled in the art.

In some cases, in order to prevent the technical concept of the present invention from being unclear, structures or devices which are publicly known may be omitted, or may be depicted as a block diagram centering on the core functions of the structures or the devices.

Further, although general terms widely used currently are selected as the terms in the present invention as much as possible, a term that is arbitrarily selected by the applicant is used in a specific case. Since the meaning of the term will be clearly described in the corresponding part of the description in such a case, it is understood that the present invention will not be simply interpreted by the terms only used in the description of the present invention, but the meaning of the terms should be figured out.

Specific terminologies used in the description below may be provided to help the understanding of the present invention. For example, a signal, data, a sample, a picture, a frame, a block, etc may be properly replaced and interpreted in each coding process.

Hereinafter, in this specification, a "processing unit" means a unit in which encoding/decoding processing process, such as prediction, transform and/or quantization, is performed. Hereinafter, for convenience of description, a processing unit may also be called a "processing block" or "block."

A processing unit may be construed as having a meaning including a unit for a luma component and a unit for a chroma component. For example, a processing unit may correspond to a coding tree unit (CTU), a coding unit (CU), a prediction unit (PU) or a transform unit (TU).

Furthermore, a processing unit may be construed as being a unit for a luma component or a unit for a chroma component. For example, the processing unit may correspond to a coding tree block (CTB), coding block (CB), prediction block (PB) or transform block (TB) for a luma component. Alternatively, a processing unit may correspond to a coding tree block (CTB), coding block (CB), prediction block (PB) or transform block (TB) for a chroma component. Furthermore, the present invention is not limited thereto, and a processing unit may be construed as a meaning including a unit for a luma component and a unit for a chroma component.

Furthermore, a processing unit is not essentially limited to a square block and may be constructed in a polygon form having three or more vertices.

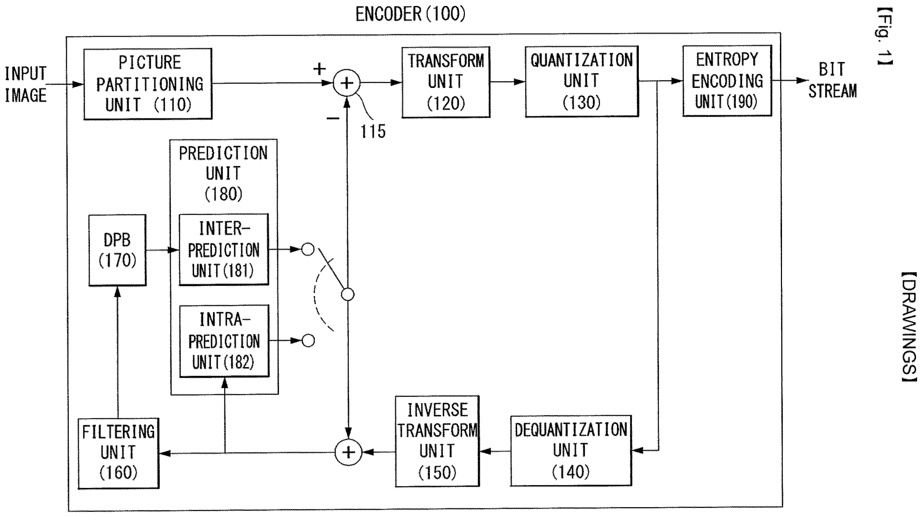

FIG. 1 is illustrates a schematic block diagram of an encoder in which the encoding of a still image or video signal is performed, as an embodiment to which the present invention is applied.

Referring to FIG. 1, the encoder 100 may include a video split unit 110, a subtractor 115, a transform unit 120, a quantization unit 130, a dequantization unit 140, an inverse transform unit 150, a filtering unit 160, a decoded picture buffer (DPB) 170, a prediction unit 180 and an entropy encoding unit 190. Furthermore, the prediction unit 180 may include an inter-prediction unit 181 and an intra-prediction unit 182.

The video split unit 110 splits an input video signal (or picture or frame), input to the encoder 100, into one or more processing units.

The subtractor 115 generates a residual signal (or residual block) by subtracting a prediction signal (or prediction block), output by the prediction unit 180 (i.e., by the inter-prediction unit 181 or the intra-prediction unit 182), from the input video signal. The generated residual signal (or residual block) is transmitted to the transform unit 120.

The transform unit 120 generates transform coefficients by applying a transform scheme (e.g., discrete cosine transform (DCT), discrete sine transform (DST), graph-based transform (GBT) or Karhunen-Loeve transform (KLT)) to the residual signal (or residual block). In this case, the transform unit 120 may generate transform coefficients by performing transform using a prediction mode applied to the residual block and a transform scheme determined based on the size of the residual block.

The quantization unit 130 quantizes the transform coefficient and transmits it to the entropy encoding unit 190, and the entropy encoding unit 190 performs an entropy coding operation of the quantized signal and outputs it as a bit stream.

Meanwhile, the quantized signal outputted by the quantization unit 130 may be used to generate a prediction signal. For example, a residual signal may be reconstructed by applying dequatization and inverse transformation to the quantized signal through the dequantization unit 140 and the inverse transform unit 150. A reconstructed signal may be generated by adding the reconstructed residual signal to the prediction signal output by the inter-prediction unit 181 or the intra-prediction unit 182.

Meanwhile, during such a compression process, neighbor blocks are quantized by different quantization parameters. Accordingly, an artifact in which a block boundary is shown may occur. Such a phenomenon is referred to a blocking artifact, which is one of important factors for evaluating image quality. In order to decrease such an artifact, a filtering process may be performed. Through such a filtering process, the blocking artifact is removed and the error of a current picture is decreased at the same time, thereby improving image quality.

The filtering unit 160 applies filtering to the reconstructed signal, and outputs it through a playback device or transmits it to the decoded picture buffer 170. The filtered signal transmitted to the decoded picture buffer 170 may be used as a reference picture in the inter-prediction unit 181. As described above, an encoding rate as well as image quality can be improved using the filtered picture as a reference picture in an inter-picture prediction mode.

The decoded picture buffer 170 may store the filtered picture in order to use it as a reference picture in the inter-prediction unit 181.

The inter-prediction unit 181 performs temporal prediction and/or spatial prediction with reference to the reconstructed picture in order to remove temporal redundancy and/or spatial redundancy. In this case, a blocking artifact or ringing artifact may occur because a reference picture used to perform prediction is a transformed signal that experiences quantization or dequantization in a block unit when it is encoded/decoded previously.

Accordingly, in order to solve performance degradation attributable to the discontinuity of such a signal or quantization, signals between pixels may be interpolated in a sub-pixel unit by applying a low pass filter to the inter-prediction unit 181. In this case, the sub-pixel means a virtual pixel generated by applying an interpolation filter, and an integer pixel means an actual pixel that is present in a reconstructed picture. A linear interpolation, a bi-linear interpolation, a wiener filter, and the like may be applied as an interpolation method.

The interpolation filter may be applied to the reconstructed picture, and may improve the accuracy of prediction. For example, the inter-prediction unit 181 may perform prediction by generating an interpolation pixel by applying the interpolation filter to the integer pixel and by using the interpolated block including interpolated pixels as a prediction block.

The intra-prediction unit 182 predicts a current block with reference to samples neighboring the block that is now to be encoded. The intra-prediction unit 182 may perform the following procedure in order to perform intra-prediction. First, the intra-prediction unit 182 may prepare a reference sample necessary to generate a prediction signal. Furthermore, the intra-prediction unit 182 may generate a prediction signal using the prepared reference sample. Next, the intra-prediction unit 182 may encode a prediction mode. In this case, the reference sample may be prepared through reference sample padding and/or reference sample filtering. A quantization error may be present because the reference sample experiences the prediction and the reconstruction process. Accordingly, in order to reduce such an error, a reference sample filtering process may be performed on each prediction mode used for the intra-prediction.

The prediction signal (or prediction block) generated through the inter-prediction unit 181 or the intra-prediction unit 182 may be used to generate a reconstructed signal (or reconstructed block) or may be used to generate a residual signal (or residual block).

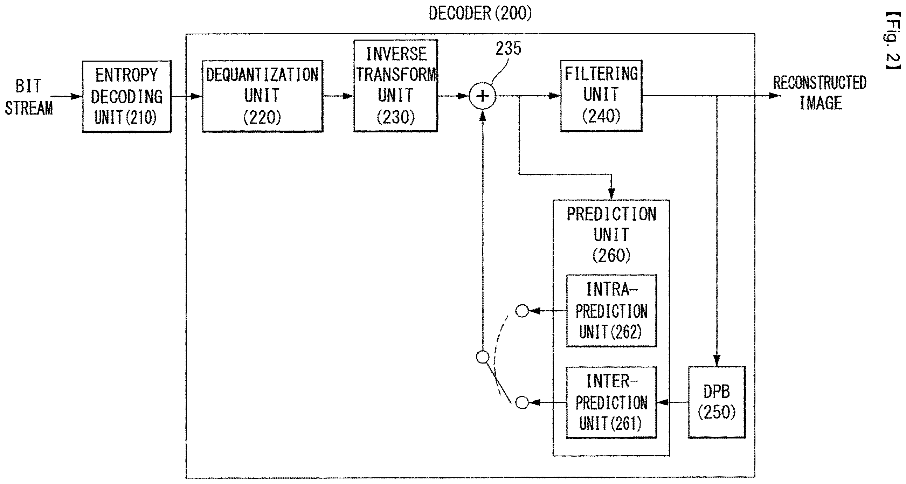

FIG. 2 illustrates a schematic block diagram of a decoder in which decoding of a still image or video signal is performed, as an embodiment to which the present invention is applied.

Referring to FIG. 2, the decoder 200 may include an entropy decoding unit 210, a dequantization unit 220, an inverse transform unit 230, an adder 235, a filtering unit 240, a decoded picture buffer (DPB) 250 and a prediction unit 260. Furthermore, the prediction unit 260 may include an inter-prediction unit 261 and an intra-prediction unit 262.

Furthermore, a reconstructed video signal output through the decoder 200 may be played back through a playback device.

The decoder 200 receives a signal (i.e., bit stream) output by the encoder 100 shown in FIG. 1. The entropy decoding unit 210 performs an entropy decoding operation on the received signal.

The dequantization unit 220 obtains transform coefficients from the entropy-decoded signal using quantization step size information.

The inverse transform unit 230 obtains a residual signal (or residual block) by inverse transforming the transform coefficients by applying an inverse transform scheme.

The adder 235 adds the obtained residual signal (or residual block) to the prediction signal (or prediction block) output by the prediction unit 260 (i.e., the inter-prediction unit 261 or the intra-prediction unit 262), thereby generating a reconstructed signal (or reconstructed block).

The filtering unit 240 applies filtering to the reconstructed signal (or reconstructed block) and outputs the filtered signal to a playback device or transmits the filtered signal to the decoded picture buffer 250. The filtered signal transmitted to the decoded picture buffer 250 may be used as a reference picture in the inter-prediction unit 261.

In this specification, the embodiments described in the filtering unit 160, inter-prediction unit 181 and intra-prediction unit 182 of the encoder 100 may be identically applied to the filtering unit 240, inter-prediction unit 261 and intra-prediction unit 262 of the decoder, respectively.

In particular, the inter-prediction unit 261 according to the present invention may further include a configuration for performing inter-prediction of a pixel unit. This is described in detail later.

In general, a block-based image compression method is used in the compression technique (e.g., HEVC) of a still image or a video. The block-based image compression method is a method of processing an image by splitting it into specific block units, and may decrease memory use and a computational load.

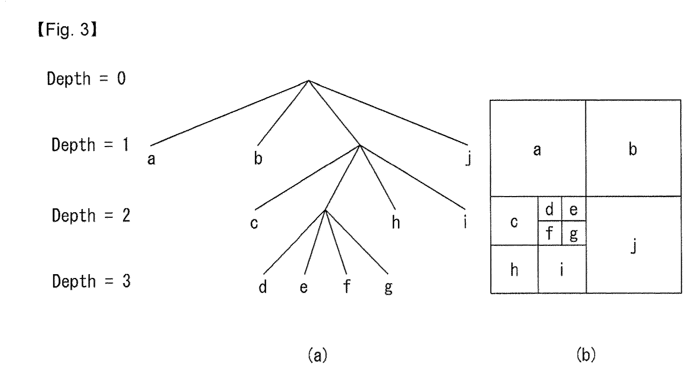

FIG. 3 is a diagram for describing a split structure of a coding unit which may be applied to the present invention.

An encoder splits a single image (or picture) into coding tree units (CTUs) of a quadrangle form, and sequentially encodes the CTUs one by one according to raster scan order.

In HEVC, a size of CTU may be determined as one of 64×64, 32×32, and 16×16. The encoder may select and use the size of a CTU based on resolution of an input video signal or the characteristics of input video signal. The CTU includes a coding tree block (CTB) for a luma component and the CTB for two chroma components that correspond to it.

One CTU may be split in a quad-tree structure. That is, one CTU may be split into four units each having a square form and having a half horizontal size and a half vertical size, thereby being capable of generating coding units (CUs). Such splitting of the quad-tree structure may be recursively performed. That is, the CUs are hierarchically split from one CTU in the quad-tree structure.

A CU means a basic unit for the processing process of an input video signal, for example, coding in which intra/inter prediction is performed. A CU includes a coding block (CB) for a luma component and a CB for two chroma components corresponding to the luma component. In HEVC, a CU size may be determined as one of 64×64, 32×32, 16×16, and 8×8.

Referring to FIG. 3, the root node of a quad-tree is related to a CTU. The quad-tree is split until a leaf node is reached. The leaf node corresponds to a CU.

This is described in more detail. The CTU corresponds to the root node and has the smallest depth (i.e., depth=0) value. A CTU may not be split depending on the characteristics of an input video signal. In this case, the CTU corresponds to a CU.

A CTU may be split in a quad-tree form. As a result, lower nodes, that is, a depth 1 (depth=1), are generated. Furthermore, a node (i.e., leaf node) that belongs to the lower nodes having the depth of 1 and that is no longer split corresponds to a CU. For example, in FIG. 3(b), a CU(a), a CU(b) and a CU(j) corresponding to nodes a, b and j have been once split from the CTU, and have a depth of 1.

At least one of the nodes having the depth of 1 may be split in a quad-tree form. As a result, lower nodes having a depth 1 (i.e., depth=2) are generated. Furthermore, a node (i.e., leaf node) that belongs to the lower nodes having the depth of 2 and that is no longer split corresponds to a CU. For example, in FIG. 3(b), a CU(c), a CU(h) and a CU(i) corresponding to nodes c, h and i have been twice split from the CTU, and have a depth of 2.

Furthermore, at least one of the nodes having the depth of 2 may be split in a quad-tree form again. As a result, lower nodes having a depth 3 (i.e., depth=3) are generated. Furthermore, a node (i.e., leaf node) that belongs to the lower nodes having the depth of 3 and that is no longer split corresponds to a CU. For example, in FIG. 3(b), a CU(d), a CU(e), a CU(f) and a CU(g) corresponding to nodes d, e, f and g have been three times split from the CTU, and have a depth of 3.

In the encoder, a maximum size or minimum size of a CU may be determined based on the characteristics of a video image (e.g., resolution) or by considering the encoding rate. Furthermore, information about the maximum or minimum size or information capable of deriving the information may be included in a bit stream. A CU having a maximum size is referred to as the largest coding unit (LCU), and a CU having a minimum size is referred to as the smallest coding unit (SCU).

In addition, a CU having a tree structure may be hierarchically split with predetermined maximum depth information (or maximum level information). Furthermore, each split CU may have depth information. Since the depth information represents a split count and/or degree of a CU, it may include information about the size of a CU.

Since the LCU is split in a Quad-tree shape, the size of SCU may be obtained by using a size of LCU and the maximum depth information. Or, inversely, the size of LCU may be obtained by using a size of SCU and the maximum depth information of the tree.

For a single CU, the information (e.g., a split CU flag (split_cu_flag)) that represents whether the corresponding CU is split may be forwarded to the decoder. This split information is included in all CUs except the SCU. For example, when the value of the flag that represents whether to split is '1', the corresponding CU is further split into four CUs, and when the value of the flag that represents whether to split is '0', the corresponding CU is not split any more, and the processing process for the corresponding CU may be performed.

As described above, a CU is a basic unit of the coding in which the intra-prediction or the inter-prediction is performed. The HEVC splits the CU in a prediction unit (PU) for coding an input video signal more effectively.

A PU is a basic unit for generating a prediction block, and even in a single CU, the prediction block may be generated in different way by a unit of PU. However, the intra-prediction and the inter-prediction are not used together for the PUs that belong to a single CU, and the PUs that belong to a single CU are coded by the same prediction method (i.e., the intra-prediction or the inter-prediction).

A PU is not split in the Quad-tree structure, but is split once in a single CU in a predetermined shape. This will be described by reference to the drawing below.

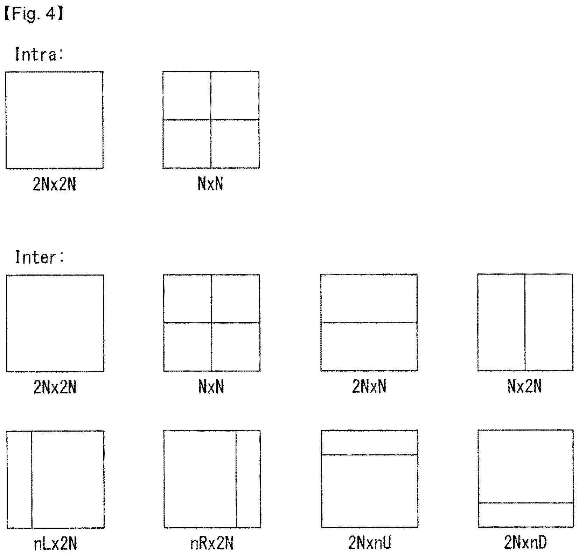

FIG. 4 is a diagram for describing a prediction unit that may be applied to the present invention.

A PU is differently split depending on whether the intra-prediction mode is used or the inter-prediction mode is used as the coding mode of the CU to which the PU belongs.

FIG. 4(a) illustrates a PU if the intra-prediction mode is used, and FIG. 4(b) illustrates a PU if the inter-prediction mode is used.

Referring to FIG. 4(a), assuming that the size of a single CU is 2N×2N (N = 4, 8, 16 and 32), the single CU may be split into two types (i.e., 2N×2N or N×N).

In this case, if a single CU is split into the PU of 2N×2N shape, it means that only one PU is present in a single CU.

Meanwhile, if a single CU is split into the PU of N×N shape, a single CU is split into four PUs, and different prediction blocks are generated for each PU unit. However, such PU splitting may be performed only if the size of CB for the luma component of CU is the minimum size (i.e., the case that a CU is an SCU).

Referring to FIG. 4(b), assuming that the size of a single CU is 2N×2N (N = 4, 8, 16 and 32), a single CU may be split into eight PU types (i.e., 2N×2N, N×N, 2N×N, N×2N, nL×2N, nRx2N, 2N×nU and 2N×nD)

As in the intra-prediction, the PU split of N×N shape may be performed only if the size of CB for the luma component of CU is the minimum size (i.e., the case that a CU is an SCU).

The inter-prediction supports the PU split in the shape of 2N×N that is split in a horizontal direction and in the shape of N×2N that is split in a vertical direction.

In addition, the inter-prediction supports the PU split in the shape of nL×2N, nR×2N, 2N×nU and 2N×nD, which is an asymmetric motion split (AMP). In this case, 'n' means 1/4 value of 2N. However, the AMP may not be used if the CU to which the PU is belonged is the CU of minimum size.

In order to encode the input video signal in a single CTU efficiently, the optimal split structure of the coding unit (CU), the prediction unit (PU) and the transform unit (TU) may be determined based on a minimum rate-distortion value through the processing process as follows. For example, as for the optimal CU split process in a 64×64 CTU, the rate-distortion cost may be calculated through the split process from a CU of 64×64 size to a CU of 8×8 size. The detailed process is as follows.

1) The optimal split structure of a PU and TU that generates the minimum rate distortion value is determined by performing inter/intra-prediction, transformation/quantization, dequantization/inverse transformation and entropy encoding on the CU of 64×64 size.

2) The optimal split structure of a PU and TU is determined to split the 64×64 CU into four CUs of 32×32 size and to generate the minimum rate distortion value for each 32×32 CU.

3) The optimal split structure of a PU and TU is determined to further split the 32×32 CU into four CUs of 16×16 size and to generate the minimum rate distortion value for each 16x16 CU.

4) The optimal split structure of a PU and TU is determined to further split the 16×16 CU into four CUs of 8×8 size and to generate the minimum rate distortion value for each 8×8 CU.

5) The optimal split structure of a CU in the 16×16 block is determined by comparing the rate-distortion value of the 16×16 CU obtained in the process 3) with the addition of the rate-distortion value of the four 8×8 CUs obtained in the process 4). This process is also performed for remaining three 16×16 CUs in the same manner.
6) The optimal split structure of CU in the 32×32 block is determined by comparing the rate-distortion value of the 32×32 CU obtained in the process 2) with the addition of the rate-distortion value of the four 16×16 CUs that is obtained in the process 5). This process is also performed for remaining three 32×32 CUs in the same manner.
7) Finally, the optimal split structure of CU in the 64×64 block is determined by comparing the rate-distortion value of the 64×64 CU obtained in the process 1) with the addition of the rate-distortion value of the four 32×32 CUs obtained in the process 6).

In the intra-prediction mode, a prediction mode is selected as a PU unit, and prediction and reconstruction are performed on the selected prediction mode in an actual TU unit.

A TU means a basic unit in which actual prediction and reconstruction are performed. A TU includes a transform block (TB) for a luma component and a TB for two chroma components corresponding to the luma component.

In the example of FIG. 3, as in an example in which one CTU is split in the quad-tree structure to generate a CU, a TU is hierarchically split from one CU to be coded in the quad-tree structure.

TUs split from a CU may be split into smaller and lower TUs because a TU is split in the quad-tree structure. In HEVC, the size of a TU may be determined to be as one of 32×32, 16×16, 8×8 and 4×4.

Referring back to FIG. 3, the root node of a quad-tree is assumed to be related to a CU. The quad-tree is split until a leaf node is reached, and the leaf node corresponds to a TU.

This is described in more detail. A CU corresponds to a root node and has the smallest depth (i.e., depth=0) value. A CU may not be split depending on the characteristics of an input image. In this case, the CU corresponds to a TU.

A CU may be split in a quad-tree form. As a result, lower nodes having a depth 1 (depth=1) are generated. Furthermore, a node (i.e., leaf node) that belongs to the lower nodes having the depth of 1 and that is no longer split corresponds to a TU. For example, in FIG. 3(b), a TU(a), a TU(b) and a TU(j) corresponding to the nodes a, b and j are once split from a CU and have a depth of 1.

At least one of the nodes having the depth of 1 may be split in a quad-tree form again. As a result, lower nodes having a depth 2 (i.e., depth=2) are generated. Furthermore, a node (i.e., leaf node) that belongs to the lower nodes having the depth of 2 and that is no longer split corresponds to a TU. For example, in FIG. 3(b), a TU(c), a TU(h) and a TU(i) corresponding to the node c, h and I have been split twice from the CU and have the depth of 2.

Furthermore, at least one of the nodes having the depth of 2 may be split in a quad-tree form again. As a result, lower nodes having a depth 3 (i.e., depth=3) are generated. Furthermore, a node (i.e., leaf node) that belongs to the lower nodes having the depth of 3 and that is no longer split corresponds to a CU. For example, in FIG. 3(b), a TU(d), a TU(e), a TU(f) and a TU(g) corresponding to the nodes d, e, f and g have been three times split from the CU and have the depth of 3.

A TU having a tree structure may be hierarchically split with predetermined maximum depth information (or maximum level information). Furthermore, each spit TU may have depth information. The depth information may include information about the size of the TU because it indicates the split number and/or degree of the TU.

Information (e.g., a split TU flag "split_transform_flag") indicating whether a corresponding TU has been split with respect to one TU may be transferred to the decoder. The split information is included in all of TUs other than a TU of a minimum size. For example, if the value of the flag indicating whether a TU has been split is "1", the corresponding TU is split into four TUs. If the value of the flag indicating whether a TU has been split is "0", the corresponding TU is no longer split.

**Method of processing image through pixel unit inter-prediction**

In order to reconstruct a current unit (or current block) on which decoding is performed, the decoded part of a current picture or other pictures including the current unit may be used. A picture (slice) using only a current picture for reconstruction, that is, on which intra-frame prediction only is performed may be called an intra-picture or an I picture (slice), a picture (slice) using a maximum of one motion vector and reference index in order to predict each unit may be called a predictive picture or a P picture (slice), and a picture (slice) using a maximum of two motion vectors and reference indices may be called a bi-predictive picture or a B picture (slice).

The intra-prediction unit performs intra prediction in which the pixel value of a target unit is predicted from reconstructed regions within a current picture. For example, the pixel value of a current unit may be predicted from pixels of units located at the top, left, top left and/or top right of a current unit.

An intra mode may be basically divided into vertical, horizontal, DC, and angular modes depending on the direction of a reference region in which reference pixels used for pixel value prediction are located and a prediction method. In the vertical mode, the pixel value of a region vertically neighboring an object unit is used as the predictor of a current unit. In the horizontal mode, the pixel value of a region horizontally neighboring an object unit is used as a predictor. In the DC mode, an average value of the pixels of reference regions is used as a predictor. Meanwhile, the angular mode corresponds to a case where a reference region is a specific direction, and may indicate a corresponding direction as an angle between a current pixel and a reference pixel. For convenience sake, a predetermined angle and a prediction mode number may be used, and the number of angles uses may be different depending on the size of a target unit.

Some specific mode for various prediction methods may be defined and used. A prediction mode may be transmitted as a value itself indicative of a corresponding mode, but in order to improve transmission efficiency, a method using the prediction mode value of a current unit may be used. In this case, the decoder may obtain the prediction mode of a current unit based on information indicating whether a predictor for a prediction mode is used without any change and a difference between the predictor and an actual value.

Meanwhile, the inter-prediction unit performs inter-prediction for predicting the pixel value of a target unit using information of other reconstructed pictures not a current picture. In this case, a reconstructed picture that belongs to reconstructed pictures stored in the DPB and that is used for inter-prediction is called a reference picture. In the inter-prediction process, an index, motion vector information, etc. indicative of a reference picture including a corresponding reference region may be used to indicate that which reference region is used to predict a current unit.

The inter-prediction may include forward direction prediction, backward direction prediction and bi-directional prediction. The forward direction prediction is prediction using a single reference picture displayed (or output) prior to a current picture temporally. The backward direction prediction means prediction using a single reference picture displayed (or output) after a current picture temporally. To this end, a single piece of motion information (e.g., motion vector and a reference picture index) may be necessary 다. In the bi-directional prediction method, a maximum of two reference regions may be used. The two reference regions may be present in the same reference picture or may be present in different pictures. That is, in the bi-directional prediction method, a maximum of two pieces of motion information (e.g., a motion vector and a reference picture index) may be used. The two motion vectors may have the same reference picture index or may have different reference picture indices. In this case, all the reference pictures may be displayed (or output) prior to a current picture temporally or may be displayed (or output) after a current picture temporally.

Motion information of a current unit may include motion vector information and a reference picture index. The motion vector information may include a motion vector, motion vector prediction (MVP) or a motion vector difference (MVD) and may mean index information specifying a motion vector predictor. A motion vector difference means a difference between a motion vector and a motion vector predictor.

The encoder searches reference pictures for a reference unit most similar to a current unit in an inter-prediction process (i.e., motion estimation), and provides the decoder with a motion vector and reference picture index for the reference unit. The encoder/decoder may obtain the reference unit of the current unit using the motion vector and the reference picture index. The reference unit is present within a reference picture having a reference picture index. Furthermore, the pixel value of a specific unit or an interpolated value may be used as he predictor of the current unit based on the motion vector. That is, motion compensation in which an image of the current unit is predicted from a previously decoded picture is performed using motion information.

Meanwhile, a reference picture list may be configured using pictures used for inter-prediction with respect to a current picture. In the case of a B picture, two reference picture lists are necessary. Hereinafter, for convenience of description, the two reference picture lists are denoted as a reference picture list 0 (or LO) and a reference picture list 1 (or L1), respectively. Furthermore, a reference picture belonging to the reference picture list 0 is called a reference picture 0 (or L0 reference picture), and a reference picture belonging to the reference picture list 1 is called a reference picture 1 (or L1 reference picture). Such a reference picture may use a method of obtaining a motion vector predictor (mvp) using motion information of previously coded units and transmitting only the difference (mvd) of the motion vector predictors (mvp) in order to reduce the amount of transmission related to a motion vector. The decoder calculates a motion vector predictor of a current unit using pieces of motion information of other decoded units and obtains a motion vector value for the current unit using the transmitted difference. In obtaining the motion vector predictor, various motion vector candidate values may be obtained using motion information of already coded units, and one of the various motion vector candidate values may be obtained as a motion vector predictor.

As described above, in general, in the still image or moving image compression technology (e.g., HEVC), a block-based image compression method is used. In particular, when inter-prediction is performed, motion prediction is performed in a prediction block unit. There is still a limit although prediction blocks of various sizes or shapes are supported in order to search for an optimal prediction block for a current block. The reason for this is that a prediction error may be minimized when a pixel unit has a motion vector or has motion vectors of various shapes.

However, since transmitting a motion vector in a pixel unit or supporting the size or shape of an additional prediction block means an increase of additional information to be coded, performance improvement is difficult to expect.

Accordingly, the present invention proposes a method of performing motion compensation in a pixel unit without the partitioning of additional information or a prediction block. By applying a motion compensation method of a pixel unit (or a picture element unit) according to the present invention, a prediction error is reduced owning to motion compensation of a pixel unit and a case where partitioning is performed in a large size is increased. Accordingly, an increase of coding efficiency attributable to a reduction of a split flag can be expected.

Hereinafter, in the description of the present invention, it is assumed that the encoder has determined an inter-prediction index, a reference picture list or motion vector information (e.g., a motion vector, a motion vector predictor or a motion vector difference) indicating whether the reference picture list 0, the reference picture list 1 or the bi-directional prediction (i.e., the reference picture lists 0 and 1) are used for a current block by performing motion estimation in the aforementioned block unit (e.g., PU unit) and has provided such information to the decoder.

Embodiment 1

An optical flow refers to a motion pattern, such as an object or which surface or an edge in a view. That is, a pattern of a motion for an object is obtained by sequentially extracting differences between images at a specific time and a previous time. In this case, information about more motions can be obtained compared to a case where a difference between a current frame and a previous fame only is obtained. The optical flow has a very important contribution, such as that it enables a target point of a moving object to be obtained in the visual recognition function of an animal having a sense of view and helps to understand the structure of a surrounding environment. Technically, the optical flow may be used to analyze a three-dimensional image in the computer vision system or may be used for image compression. Several methods of realizing the optical flow have been proposed.

In accordance with the existing motion compensation method adopting the optical flow, the following equation is derived through two assumptions in which when an object moves for a short time, it moves at a specific rate in the state in which a corresponding pixel value is not changed.

A detailed derivation process is as follows.

First, it is assumed that when an object movers for a short time, a corresponding pixel value is not changed. It is assumed that a pixel value at (x, y) coordinates in time t is I(x, y, t) and a pixel value when an object moves $\delta x(=Vx)$, $\delta y(=Vy)$ for $\delta t$ time is I(x + $\delta x$, y + $\delta y$, t + $\delta t$). According to the above assumption, Equation 1 below is established.

[Equation 1]

$$I(x, y, t) = I(x + \delta x, y + \delta y, t + \delta t)$$

If a right term in Equation 1 is developed in Taylor series, it may be arranged as in Equation 2.

[Equation 2]

$$I(x + \delta x, y + \delta y, t + \delta t) = I(x, y, t) + \frac{\partial I}{\partial x}\delta x + \frac{\partial I}{\partial y}\delta y + \frac{\partial I}{\partial t}\delta t + \dots$$

Second, it is assumed that an object moves at a specific rate for a short time. This is described with reference to the following drawing.

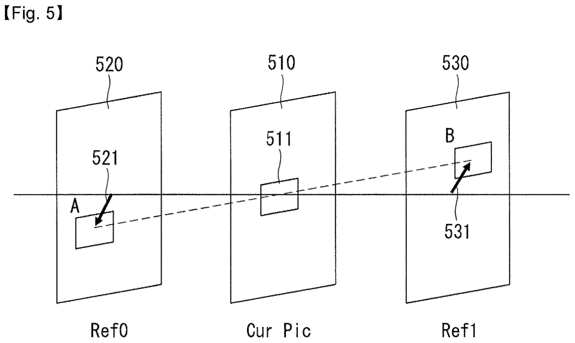

FIG. 5 is an embodiment to which the present invention may be applied and illustrates a bi-directional prediction method of a picture having a steady motion.

FIG. 5 illustrates that bi-directional reference pictures (Ref) 520 and 530 are present based on a current picture (Cur Pic) 510.

In this case, as described above, on the assumption that an object has a steady motion, an offset (i.e., a first motion vector) 521 from the coordinates of a current processing block 511 within the current picture (Cur Pic) 310 to the coordinates of a reference block A location within the reference picture 0(Ref0) 520 and an offset (i.e., a second motion vector) 531 from the coordinates of the current processing block 511 within the current picture (Cur Pic) 501 to the coordinates of a reference block B location within the reference picture 1(Ref1) 530 may be expressed as symmetrical values. That is, a first motion vector 521 related to the reference block A location and a second motion vector 531 related to the reference block B location may be expressed as having the same size and having opposite directions.

A difference between pixel values in the reference block A location and the reference block B location is arranged as in Equation 3 according to the aforementioned two assumptions.

[Equation 3]

$$\Delta(i, j) = A - B$$

$$= I(x + \delta x, y + \delta y, t + \delta t) - I(x - \delta x, y - \delta y, t - \delta t)$$

$$= I(x, y, t) + \frac{\partial I}{\partial x}\delta x + \frac{\partial I}{\partial y}\delta y + \frac{\partial I}{\partial t}\delta t - \left(I(x, y, t) - \frac{\partial I}{\partial x}\delta x - \frac{\partial I}{\partial y}\delta y - \frac{\partial I}{\partial t}\delta t\right)$$

$$= \left(\frac{\partial I}{\partial x}Vx + \frac{\partial I}{\partial y}Vy + \frac{\partial I}{\partial t}\right) - \left(-\frac{\partial I}{\partial x}Vx - \frac{\partial I}{\partial y}Vy + \frac{\partial I}{\partial t}\right)$$

$$= Vx(I_x^{(0)}[i, j] + I_x^{(1)}[i, j]) + Vy(I_y^{(0)}[i, j] + I_y^{(1)}[i, j]) + (P^{(0)}[i, j] - P^{(1)}[i, j])$$

In Equation 3, $(i, j)$ indicates the location of a specific pixel within the current processing block 511.

Furthermore, $\frac{\partial I}{\partial x}$, $\frac{\partial I}{\partial y}$, and $\frac{\partial I}{\partial t}$ indicate partial differentiations in an x axis (horizontal axis), a y axis (vertical axis), and a t axis (temporal axis), respectively. Gradients in the x axis and the y axis at the $(i, j)$ location may be expressed as $I_x^{(k)}[i, j]$ and $I_y^{(k)}[i, j]$ ($k = 0, 1$), respectively. Furthermore, a gradient in the t axis, that is, a prediction pixel value, may be expressed $P^{(k)}[i, j]$ ($k = 0, 1$).

It has been assumed that when the object moves for a short time, a corresponding pixel value is not changed. Accordingly, motion vectors $Vx(i, j)$ and $Vy(i, j)$ of a pixel unit that minimize $\Delta^2(i, j)$ can be obtained according to Equation 3.

As a result, it is an object of searching for a motion vector in which the pixel value of the A reference block and the pixel value of the B reference block have the same value (or a value having a minimum difference), but an error between the pixels may be great. Accordingly, a motion vector in which a difference between the pixel values is a minimum within a specific window size may be searched for. Accordingly, assuming that a locally steady motion is present based on $(i, j)$ within a window $\Omega$, if the window includes $(2M+1) \times (2M+1)$, a location within the window may be indicated as $(i', j')$. In this case, $(i', j')$ satisfies $i - M \leq i' \leq i + M$, $j - M \leq j' \leq j + M$.

Accordingly, a motion vector that minimizes $\Sigma_\Omega \Delta^2(i', j')$ is searched for.

[Equation 4]

$$Gx = (I_x^{(0)}[i', j'] + I_x^{(1)}[i', j'])$$

$$Gy = (I_y^{(0)}[i', j'] + I_y^{(1)}[i', j'])$$

$$\delta P = (P^{(0)}[i', j'] - P^{(1)}[i', j'])$$

Gx indicates the sum of the gradients in the x axis, Gy indicates the sum of the gradient in the y axis, and $\delta P$ indicates the sum of gradients in the t axis, that is, the sum of prediction pixel values.

If each term of Equation 3 is arranged using Equation 4, it may be expressed as in Equation 5.

[Equation 5]

$$\Delta^2(i', j') = (\ Vx \sum_\Omega Gx + Vy \sum_\Omega Gy + \sum_\Omega \delta P\ )^2$$

If Equation 5 is arranged through partial differentiation into Vx and Vy, it is expressed as in Equation 6.

[Equation 6]

$$Vx \sum_{\Omega} G^2x \;+\; Vy \sum_{\Omega} GxGy + \sum_{\Omega} Gx\delta P \;=\; 0$$

$$Vx \sum_{\Omega} GxGy \;+\; Vy \sum_{\Omega} G^2y + \sum_{\Omega} Gy\delta P \;=\; 0$$

*If s1 = $\Sigma_{\Omega}G^2x$, s2 = s4 = $\Sigma_{\Omega}GxGy$, s3 = -$\Sigma_{\Omega}Gx\delta P$, s5 = $\Sigma_{\Omega}G^2y$, s6 = -$\Sigma_{\Omega}Gy\delta P$, Vx and Vy in Equation 6 are arranged in to an equation, such as Equation 7.*

[Equation 7]

$$Vx = \frac{s3s5 - s2s6}{s1s5 - s2s4}$$

$$Vy = \frac{s1s6 - s3s4}{s1s5 - s2s4}$$

Accordingly, a predictor may be calculated using Vx and Vy as in Equation 8.

$$P[i, j] = ((P^{(0)}[i, j] + P^{(1)}[i, j] + Vx[i, j](I_x^{(0)}[i, j]) + Vy[i, j](I_y^{(0)}[i, j] - I_y^{(1)}[i, j])) >> 1 \qquad \text{[Equation 8]}$$

In Equation 8, P[i, j] indicates a predictor for each pixel [i, j] within the current block. P^(0)[i, j] and P^(1)[i, j] indicate respective pixel values belonging to the L0 reference block and the L1 reference block, respectively.
The motion vector and reference value of each pixel unit may be obtained using the optical flow according to the above method.
However, the motion vector may be applied only when true bi-directional prediction, that is, the picture order count (POC) of a current picture, is located between the POCs of a reference picture, and is assumed to have the same Vx, Vy bi-directionally without taking into consideration the distance between the current picture and the two reference pictures. Accordingly, improvement is necessary.
Accordingly, the present invention proposes a motion compensation method of a pixel unit, which may be applied regardless of whether the POC of a current picture is located between the POCs of two reference pictures while taking into consideration the distance between the current picture and the two reference pictures. That is, there is proposed a method of generating a prediction block for a current block by deriving a motion vector of a pixel unit and deriving a predictor in a pixel unit based on the derived motion vector of a pixel unit.

Embodiment

In accordance with an embodiment of the present invention, a scaled motion vector is derived by taking into consideration the distance between a current picture and two reference pictures. This is described with reference to the following drawing.

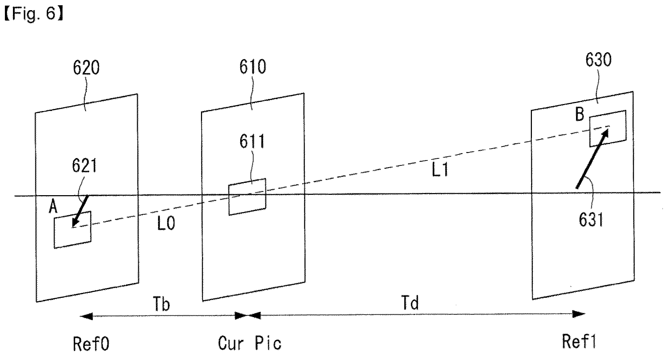

FIG. 6 is a diagram illustrating a method of performing motion compensation in a pixel unit according to an embodiment of the present invention.
FIG. 6 illustrates a case where the distance between a current picture (Cur Pic) 610 and a L0 reference picture (RefO) 620 and the distance between the current picture (Cur Pic) 610 and an L1 reference picture (Ref1) 630 are different.
Assuming that the distance between the current picture 610 and the L0 reference picture 620, that is, a short distance, is Tb and the distance between the current picture 610 and the L1 reference picture 630, that is, a long distance, is Td, motion vectors 621 and 631 of a pixel unit to be obtained are scaled at the ratio of the distance between pictures (i.e., Tb and Td). In this case, the distance between pictures may be determined to be a difference between the POC values of the pictures.
This is expressed into Equation 9.

[Equation 9]

$$\alpha \cdot (Vx^{(0)}, Vy^{(0)}) = -(Vx^{(1)}, Vy^{(1)})$$

$(Vx^{(0)}, Vy^{(0)})$ indicates the motion vector 621 of the L0 reference picture 620 for the current block 611, and $(Vx^{(1)}, Vy^{(1)})$ indicates the motion vector 631 of the L1 reference picture 630 for the current block 611. Furthermore, in Equation 9, a scale factor $\alpha$ = Td/Tb.

If Equation 3 is applied to them, the difference between pixel values at the reference block A location and the reference block B location is arranged as in Equation 10.

[Equation 10]

$$\Delta(i, j) = A - B$$

$$= I(x + \delta x, y + \delta y, t + \delta t) - I(x - \alpha \cdot \delta x, y - \alpha \cdot \delta y, t - \alpha \cdot \delta t)$$

$$= I(x, y, t) + \frac{\partial I}{\partial x}\delta x + \frac{\partial I}{\partial y}\delta y + \frac{\partial I}{\partial t}\delta t - (I(x, y, t) - \alpha \cdot \frac{\partial I}{\partial x}\delta x - \alpha \cdot \frac{\partial I}{\partial y}\delta y - \alpha \cdot \frac{\partial I}{\partial t}\delta t)$$

$$= \left(\frac{\partial I}{\partial x}Vx + \frac{\partial I}{\partial y}Vy + \frac{\partial I}{\partial t}\right) - \left(-\alpha \cdot \frac{\partial I}{\partial x}Vx - \alpha \cdot \frac{\partial I}{\partial y}Vy + \alpha \cdot \frac{\partial I}{\partial t}\right)$$

$$= Vx(I_x^{(0)}[i, j] + \alpha \cdot I_x^{(1)}[i, j]) + Vy(I_y^{(0)}[i, j] + \alpha \cdot I_y^{(1)}[i, j]) + (P^{(0)}[i, j] - P^{(1)}[i, j])$$

Motion vectors $Vx(i, j)$ and $Vy(i, j)$ of a pixel unit that minimize $\Delta^2(i, j)$ may be derived using the same method as that of Embodiment 1.

Furthermore, a predictor may be derived as in Equation 11 in each pixel unit of the current block using the motion vectors $Vx(i, j)$ and $Vy(i, j)$ of a pixel unit.

$$P[i, j] = ((P^{(0)}[i, j] + P^{(1)}[i, j]) + Vx[i, j](I_x^{(0)}[i, j] - \alpha \cdot I_x^{(1)}[i, j]) + Vy[i, j](I_y^{(0)}[i, j] - \alpha \cdot I_y^{(1)}[i, j])) >> 1 \qquad \text{[Equation 11]}$$

Embodiment 3

It is assumed that a current picture is a generalized B picture (i.e., a picture to which bi-directional prediction using two reference pictures is applied) and L0 and L1 reference pictures are present temporally in the same direction based on the current picture. In this case, if a reference picture L1' in the opposite direction is present in the DPB, one of reference blocks within the L0 and L1 reference pictures are substituted with a reference block within the reference picture L1' temporally in the opposite direction. That is, a reference block within the reference picture L1' temporally in the opposite direction is generated by scaling any one of the reference blocks within the L0 and L1 reference pictures. For example, a reference picture for the L0 and L1 reference pictures may be used as the reference picture in the opposite direction. This is described with reference to the following drawing.

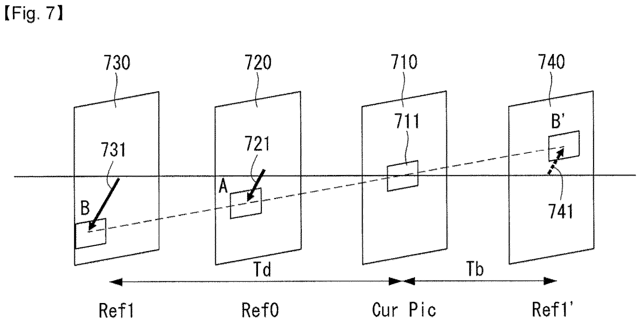

FIG. 7is a diagram illustrating a method of performing motion compensation in a pixel unit according to an embodiment of the present invention.

FIG. 7 illustrates a case where a current picture (Cur Pic) 710 is a B picture and an L0 reference picture (RefO) 720 and an L1 reference picture (Ref1) 730 are present temporally in the same direction.

In this case, the L1 reference picture (Ref1) 730 may be substituted with an L1' reference picture (Ref1') 740 so that the L0 reference picture 720 and the L1 reference picture 730 are located temporally in different directions. In other words, a reference block B within the L1 reference picture 730 may be substituted with a reference block B' within the L1' reference picture (Ref1') 740.

In order to derive the reference block B', a motion vector $(Vx^{(1)}, Vy^{(1)})'$ is generated by scaling the motion vector $(Vx^{(1)}, Vy^{(1)})$ of the L1 reference picture (Ref1) 730 for the current processing block 711 as the L1' reference picture (Ref1') 740. That is, as in Equation 12, the reference block B' may be derived by scaling the motion vector $(Vx^{(1)}, Vy^{(1)})$ of the L1 reference picture (Ref1) 730 for the current processing block 711 temporally in the opposite direction.

[Equation 12]

$$\beta \cdot (Vx^{(1)}, Vy^{(1)}) = -(Vx^{(1)}, Vy^{(1)})'$$

In Equation 12, a scale factor $\alpha$ = Tb/Td.

This method is more effective if the reference picture L1', the reference picture (Ref1') 740 is present in the distance closer to the current picture in the direction opposite the direction of the L0 reference picture (RefO) 720.

If the L0 reference picture (RefO) 720 and the L1 reference picture (Ref1) 730 are the same picture, the reference block B' may be derived by scaling the motion vector of the L1 reference picture in the opposite direction.

In contrast, if the L0 reference picture (RefO) 720 and the L1 reference picture (Ref1) 730 are different pictures, it is effective to scale a reference picture far from the current picture 710 (i.e., a reference picture having a great POC difference).

If |POC(Cur) - POC(Ref0)| and |POC(Cur) - POC(Ref1')| are the same, a difference between pixel values at the reference block A location and the reference block B' location is modified as in Equation 13.

[Equation 13]

$$\Delta(i, j) = A - B'$$

$$= I(x + \delta x, y + \delta y, t + \delta t) - I(x - \delta x, y - \delta y, t - \delta t)$$

$$= I(x, y, t) + \frac{\partial I}{\partial x}\delta x + \frac{\partial I}{\partial y}\delta y + \frac{\partial I}{\partial t}\delta t - \left(I(x, y, t) - \frac{\partial I}{\partial x}\delta x - \frac{\partial I}{\partial y}\delta y - \frac{\partial I}{\partial t}\delta t\right)$$

$$= \left(\frac{\partial I}{\partial x}Vx + \frac{\partial I}{\partial y}Vy + \frac{\partial I}{\partial t}\right) - \left(-\frac{\partial I}{\partial x}Vx - \frac{\partial I}{\partial y}Vy + \frac{\partial I}{\partial t}\right)$$

$$= Vx(I_x^{(0)}[i, j] + I_x^{(1)}[i, j]) + Vy(I_y^{(0)}[i, j] + I_y^{(1)}[i, j]) + (P^{(0)}[i, j] - P^{(1)}[i, j]')$$

Motion vectors Vx(i, j) and Vy(i, j) of a pixel unit that minimize $\Delta^2(i, j)$ may be found by the aforementioned method.

Furthermore, a predictor may be calculated as in Equation 14 using the motion vectors.

$$P[i, j] = ((P^{(0)}[i, j] + P^{(1)}[i, j]') + Vx[i, j](I_x^{(0)}[i, j] - I_x^{(1)}[i, j]) + Vy[i, j](I_y^{(0)}[i, j] - I_y^{(1)}[i, j])) >> 1 \qquad \text{[Equation 14]}$$

In contrast, if |POC(Cur) - POC(Ref0)| and |POC(Cur) - POC(Ref1')| are different, the aforementioned scale factor $\alpha$ of Embodiment 2 may be applied. A difference between pixel values at the reference block A and the reference block B' location is modified as in Equation 15.

[Equation 15]

$$\Delta(i, j) = A - B'$$

$$= I(x + \delta x, y + \delta y, t + \delta t) - I(x - \alpha \cdot \delta x, y - \alpha \cdot \delta y, t - \alpha \cdot \delta t)$$

$$= I(x, y, t) + \frac{\partial I}{\partial x}\delta x + \frac{\partial I}{\partial y}\delta y + \frac{\partial I}{\partial t}\delta t - \left(I(x, y, t) - \alpha \cdot \frac{\partial I}{\partial x}\delta x - \alpha \cdot \frac{\partial I}{\partial y}\delta y - \alpha \cdot \frac{\partial I}{\partial t}\delta t\right)$$

$$= \left(\frac{\partial I}{\partial x}Vx + \frac{\partial I}{\partial y}Vy + \frac{\partial I}{\partial t}\right) - \left(-\alpha \cdot \frac{\partial I}{\partial x}Vx - \alpha \cdot \frac{\partial I}{\partial y}Vy + \alpha \cdot \frac{\partial I}{\partial t}\right)$$

$$= Vx(I_x^{(0)}[i, j] + \alpha \cdot I_x^{(1)}[i, j]) + Vy(I_y^{(0)}[i, j] + \alpha \cdot I_y^{(1)}[i, j]) + (P^{(0)}[i, j] - P^{(1)}[i, j]')$$

Motion vectors Vx(i, j) and Vy(i, j) of a pixel unit that minimize $\Delta^2(i, j)$ may be found by the aforementioned method.

Furthermore, a predictor may be calculated as in Equation 16 using the motion vectors.

$$P[i, j] = ((P^{(0)}[i, j] + P^{(1)}[i, j]') + Vx[i, j](I_x^{(0)}[i, j] - \alpha \cdot I_x^{(1)}[i, j]) + Vy[i, j](I_y^{(0)}[i, j] - \alpha \cdot I_y^{(1)}[i, j])) >> 1 \qquad \text{[Equation 16]}$$

Embodiment 4

In accordance with an embodiment of the present invention, if a current picture is a generalized B picture and only an L0 reference picture and an L1 reference picture are present in the same direction, a motion vector of a pixel unit and a predictor may be calculated using the L0 reference picture and the L1 reference picture. This is described with reference to the following drawing.

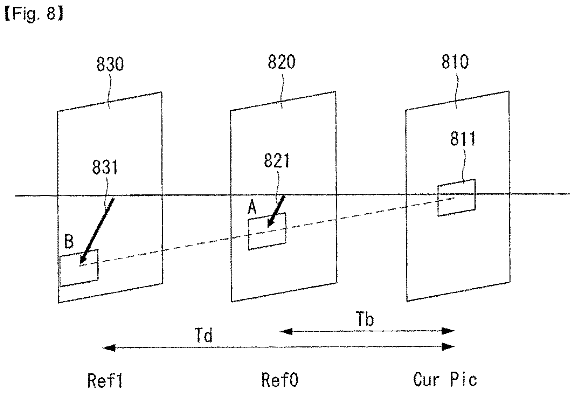

FIG. 8 is a diagram illustrating a method of performing motion compensation in a pixel unit according to an embodiment of the present invention.

FIG. 8 illustrates a case where a current picture (Cur Pic) 810 is a B picture and an L0 reference picture (RefO) 820 and an L1 reference picture (Ref1) 830 are present in the same direction. Furthermore, it is assumed that the method of Embodiment 3 cannot be used because there is no reference picture in a different direction.

Assuming that the distance between the current picture 810 and the L0 reference picture 820, that is, a short distance, is Tb and the distance between the current picture 810 and the L1 reference picture 830, that is, a long distance, is Td, motion vectors 821 and 831 of a pixel unit to be calculated are scaled at the ratio of the distance between pictures (i.e., Tb and Td). This is expressed into Equation 17.

[Equation 17]

$$\gamma \cdot (Vx^{(0)}, Vy^{(0)}) = (Vx^{(1)}, Vy^{(1)})$$

$(Vx^{(0)}, Vy^{(0)})$ indicates the motion vector 821 of the L0 reference picture 820 for the current processing block 821, and $(Vx^{(1)}, Vy^{(1)})$ indicates the motion vector 831 of the L1 reference picture 830 for the current processing block 821. Furthermore, in Equation 17, a scale factor $\gamma$ = Td/Tb.

If this is applied to Equation 3, a difference between pixel values at the reference block A location and the reference block B location is arranged as in Equation 18.

[Equation 18]

$$\Delta(i, j) = A - B$$

$$= I(x + \delta x, y + \delta y, t + \delta t) - I(x + \gamma \cdot \delta x, y + \gamma \cdot \delta y, t + \gamma \cdot \delta t)$$

$$= I(x, y, t) + \frac{\partial I}{\partial x}\delta x + \frac{\partial I}{\partial y}\delta y + \frac{\partial I}{\partial t}\delta t - (I(x, y, t) + \gamma \cdot \frac{\partial I}{\partial x}\delta x + \gamma \cdot \frac{\partial I}{\partial y}\delta y + \gamma \cdot \frac{\partial I}{\partial t}\delta t)$$

$$= \left(\frac{\partial I}{\partial x}Vx + \frac{\partial I}{\partial y}Vy + \frac{\partial I}{\partial t}\right) - \left(\gamma \cdot \frac{\partial I}{\partial x}Vx + \gamma \cdot \frac{\partial I}{\partial y}Vy + \gamma \cdot \frac{\partial I}{\partial t}\right)$$

$$= Vx(I_x^{(0)}[i, j] - \gamma \cdot I_x^{(1)}[i, j]) + Vy(I_y^{(0)}[i, j] - \gamma \cdot I_y^{(1)}[i, j]) + (P^{(0)}[i, j] - P^{(1)}[i, j])$$

Motion vectors Vx(i, j) and Vy(i, j) of a pixel unit that minimize $\Delta^2(i, j)$ may be found by the aforementioned method.

Furthermore, a predictor may be calculated as in Equation 19 using the motion vectors.

$$P[i, j] = ((P^{(0)}[i, j] + P^{(1)}[i, j]) + Vx[i, j](I_x^{(0)}[i, j] - \gamma \cdot I_x^{(1)}[i, j]) + Vy[i, j](I_y^{(0)}[i, j] + \gamma \cdot I_y^{(1)}[i, j])) >> 1 \qquad \text{[Equation 19]}$$

Embodiment 5

If a current picture is a P picture (i.e., a picture to which unidirectional prediction using a single reference picture is applied), a motion vector that minimizes a difference between pixel values may be found using the reference block A of the current block and the reference block B' of the reference block A.

FIG. 9 is a diagram illustrating a method of performing motion compensation in a pixel unit according to an embodiment of the present invention.

FIG. 9 illustrates a case where a current picture (Cur Pic) 910 is a P picture and an L0 reference picture (RefO) 920 is present. In this case, a motion vector that minimizes a difference between a pixel value at the location of the reference block A of the L0 reference picture (RefO) 920 and a pixel value at the location of the reference block B' of the L0' reference picture (RefO) 730 may be found.

In this case, the scale factor $\gamma$, such as that of Embodiment 4, may be applied depending on the distance of the L0' reference picture (RefO) 930.

A difference between pixel values at the reference block A and reference block B' locations, such as in the example of FIG. 9, may be arranged as in Equation 20.

[Equation 20]

$$\Delta(i, j) = A - B'$$

$$= I(x + \delta x, y + \delta y, t + \delta t) - I(x + \gamma \cdot \delta x, y + \gamma \cdot \delta y, t + \gamma \cdot \delta t)$$

$$= I(x, y, t) + \frac{\partial I}{\partial x}\delta x + \frac{\partial I}{\partial y}\delta y + \frac{\partial I}{\partial t}\delta t - (I(x, y, t) + \gamma \cdot \frac{\partial I}{\partial x}\delta x + \gamma \cdot \frac{\partial I}{\partial y}\delta y + \gamma \cdot \frac{\partial I}{\partial t}\delta t)$$

$$= \left(\frac{\partial I}{\partial x}Vx + \frac{\partial I}{\partial y}Vy + \frac{\partial I}{\partial t}\right) - \left(\gamma \cdot \frac{\partial I}{\partial x}Vx + \gamma \cdot \frac{\partial I}{\partial y}Vy + \gamma \cdot \frac{\partial I}{\partial t}\right)$$

$$= Vx(I_x^{(0)}[i, j] - \gamma \cdot I_x^{(1)}[i, j]) + Vy(I_y^{(0)}[i, j] - \gamma \cdot I_y^{(1)}[i, j]) + (P^{(0)}[i, j] - P^{(1)}[i, j]')$$

Motion vectors Vx(i, j) and Vy(i, j) of a pixel unit that minimize $\Delta^2(i, j)$ may be found by the aforementioned method. Furthermore, a predictor may be calculated as in Equation 21 using the motion vectors.

$$P[i, j] = ((P^{(0)}[i, j] + P^{(1)}[i, j]') + Vx[i, j](I_x^{(0)}[i, j] + \gamma \cdot I_x^{(1)}[i, j]) + Vy[i, j](I_y^{(0)}[i, j] + \gamma \cdot I_y^{(1)}[i, j])) >> 1 \qquad \text{[Equation 21]}$$

If bi-directional prediction is performed on the reference block of a current block, pixel unit motion compensation for the current block may be performed using any one of two reference blocks. This is described with reference to the following drawing.

FIG. 10 is a diagram illustrating a method of performing motion compensation in a pixel unit according to an embodiment of the present invention.

In FIG. 10, if a current picture (Cur Pic) 1010 is a P picture and bi-directional prediction is applied to the reference block A of the L0 reference picture (RefO) 1020 of the current block, a reference picture (an L1' reference picture (Ref1') 1040 in the case of FIG. 10) that belongs to the L0' reference picture (Ref0') 1030 and L1' reference picture (Ref1') 1040 of the reference block A of the current block and that is closer to the current picture (Cur Pic) 1010 is selected. The reference block of the corresponding reference picture is set as B'.

If the distance between the current picture (Cur Pic) 1010 and the L0' reference picture (Ref0') 1030 and the distance between the current picture (Cur Pic) 1010 and the L1' reference picture (Ref1') 1040 are the same, a reference picture in a predetermined direction may be selected.

A motion vector that minimizes the pixel values of A and B' is calculated. In this case, a scale factor $\alpha$ may be applied as in Embodiment 2 depending on the distance of the L1' reference picture (Ref1') 1040.

A difference between pixel values at the reference block A and reference block B' locations may be arranged as in Equation 22.

[Equation 22]
$$\Delta(i, j) = A - B'$$

$$= I(x + \delta x, y + \delta y, t + \delta t) - I(x - \alpha \cdot \delta x, y - \alpha \cdot \delta y, t - \alpha \cdot \delta t)$$

$$= I(x, y, t) + \frac{\partial I}{\partial x}\delta x + \frac{\partial I}{\partial y}\delta y + \frac{\partial I}{\partial t}\delta t - (I(x, y, t) - \alpha \cdot \frac{\partial I}{\partial x}\delta x - \alpha \cdot \frac{\partial I}{\partial y}\delta y - \alpha \cdot \frac{\partial I}{\partial t}\delta t)$$

$$= \left(\frac{\partial I}{\partial x}Vx + \frac{\partial I}{\partial y}Vy + \frac{\partial I}{\partial t}\right) - \left(-\alpha \cdot \frac{\partial I}{\partial x}Vx - \alpha \cdot \frac{\partial I}{\partial y}Vy + \alpha \cdot \frac{\partial I}{\partial t}\right)$$

$$= Vx(I_x^{(0)}[i, j] + \alpha \cdot I_x^{(1)}[i, j]) + Vy(I_y^{(0)}[i, j] + \alpha \cdot I_y^{(1)}[i, j]) + (P^{(0)}[i, j] - P^{(1)}[i, j]')$$

Motion vectors Vx(i, j) and Vy(i, j) of a pixel unit that minimize $\Delta^2(i, j)$ may be found by the aforementioned method.

Furthermore, a predictor may be calculated as in Equation 23 using the motion vectors.

$$P[i, j] = ((P^{(0)}[i, j] + P^{(1)}[i, j]') + Vx[i, j](I_x^{(0)}[i, j] - \alpha \cdot I_x^{(1)}[i, j]) + Vy[i, j](I_y^{(0)}[i, j] - \alpha \cdot I_y^{(1)}[i, j])) >> 1 \qquad \text{[Equation 23]}$$

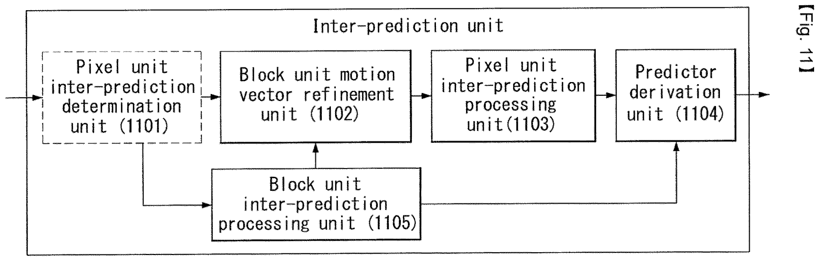

FIG. 11 is a diagram more specifically illustrating an inter-prediction unit according to an embodiment of the present invention.

Referring to FIG. 11, the inter-prediction unit 181 (refer to FIG. 1) and 261 (refer to FIG. 2) implements the functions, processes and/or methods proposed in Embodiment 1 to Embodiment 5. Specifically, the inter-prediction unit 181, 261 may be configured to include a block unit motion vector refinement unit 1102, a pixel unit inter-prediction processing unit 1103, a predictor derivation unit 1104 and a block unit inter-prediction processing unit 1105. Furthermore, the inter-prediction unit may further include a pixel unit inter-prediction determination unit 1101.

The block unit inter-prediction processing unit 1105 is an element for processing an inter-prediction method defined in the existing still image or moving image compression technology (e.g., HEVC) and is a known technology, and thus a detailed description thereof is omitted.

The block unit motion vector refinement unit 1102 refines a motion vector for a current block (derived from the block unit inter-prediction processing unit 1105) at the distance ratio of the current picture and a first reference picture/second reference picture.

The block unit motion vector refinement unit 1102 may derive a gradient Ix in the x axis (horizontal) direction and a gradient Iy in the y axis (vertical) direction based on a motion vector for a current block, and may apply an interpolation filter to the current block.

In this case, the distance between the current picture and the first reference picture/second reference picture may correspond to a difference between the POC of the current picture and the POC of the first reference picture/second reference picture.

The pixel unit inter-prediction processing unit 1103 derives a motion vector of a pixel unit for each pixel within a current block based on the motion vector of the current block refined by the block unit motion vector refinement unit 1102, and derives a predictor for each pixel within the current block based on the motion vector of a pixel unit.

The predictor derivation unit 1104 derives a predictor for a current block.

In this case, the predictor derivation unit 1104 may use a predictor for each pixel within the current block derived by the pixel unit inter-prediction processing unit 1103 or a predictor for the current block derived by the block unit inter-prediction processing unit 1105 as the predictor for the current block.

Alternatively, the predictor derivation unit 1103 may generate a predictor for a current block by the weighted sum of a first predictor for the current block derived by the block unit inter-prediction processing unit 1105 and a second predictor derived based on a motion vector of a pixel unit derived by a pixel unit motion vector derivation unit 1103.

The pixel unit inter-prediction determination unit 1101 determines whether to apply inter-prediction of a pixel unit (e.g., an optical flow).

For example, if a difference between two predictors derived through the inter-prediction of the existing block unit for a current block is greater than a predetermined threshold, the pixel unit inter-prediction determination unit 1101 may not apply the inter-prediction of a pixel unit to the current block. If the inter-prediction of a pixel unit is not applied as described above, a predictor for the current block may be derived by the block unit inter-prediction processing unit 1105.

Alternatively, from a viewpoint of the encoder, the pixel unit inter-prediction determination unit 1101 may calculate a rate-distortion cost (RD cost) between a case where inter-prediction of a block unit for a current block is applied and a case where inter-prediction of a pixel unit is applied, and may determine whether to apply inter-prediction of a pixel unit. Furthermore, the pixel unit inter-prediction determination unit 1101 may signal information about whether to apply inter-prediction of a pixel unit to the decoder through a bit stream. In contrast, from a viewpoint of the decoder, the pixel unit inter-prediction determination unit 1101 may receive signaling for information about whether to apply inter-prediction of a pixel unit from the encoder for a current block, and may determine whether to apply inter-prediction of a pixel unit.

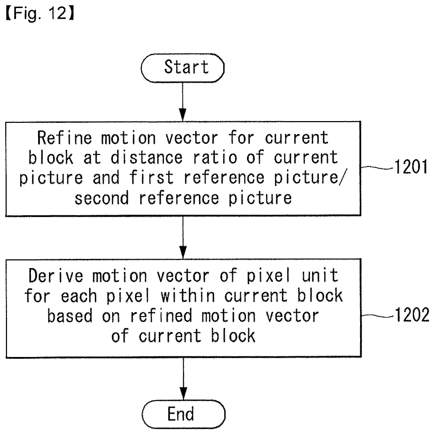

FIG. 12 is a diagram illustrating a method of processing an image based on inter-prediction according to an embodiment of the present invention.

Referring to FIG. 12, the encoder/decoder refines a motion vector for a current block at the distance ratio of a current picture and a first reference picture/second reference picture (S1201).

In this case, the distance between the current picture and the first reference picture/second reference picture may correspond to a difference between the POC of the current picture and the POC of the first reference picture/second reference picture.

The encoder/decoder derives a motion vector of a pixel unit for each pixel within the current block based on the motion vector of the current block refined at step S1201 (S1202).

Furthermore, the encoder/decoder derives a predictor for the current block based on the motion vector of a pixel unit derived at step S1202 (S1203).

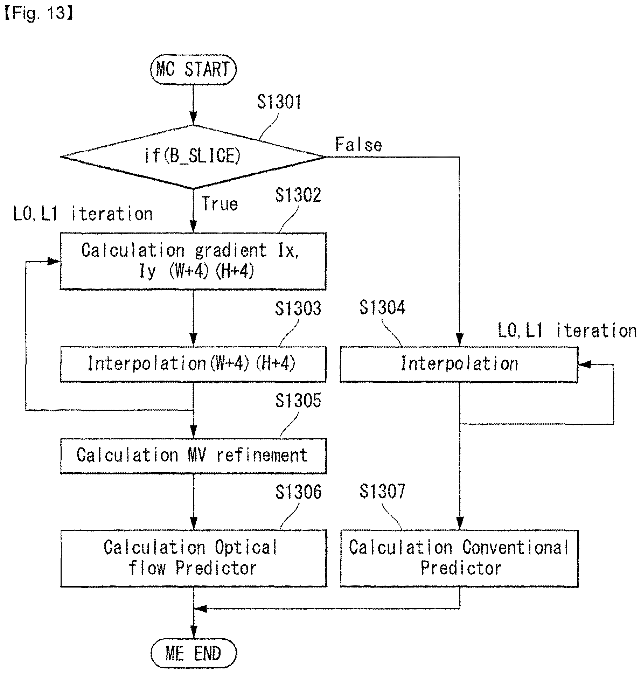

FIG. 13 is a diagram illustrating a method of processing an image based on inter-prediction according to an embodiment of the present invention.

Referring to FIG. 11, the encoder/decoder refines a motion vector for a current block at the distance ratio of the current picture and a first reference picture/second reference picture (S1101).

In this case, the distance between the current picture and the first reference picture/second reference picture may correspond to a difference between the POC of the current picture and the POC of the first reference picture/second reference picture.

In this case, at step S1101, the first reference picture and the second reference picture may be determined using the aforementioned methods of Embodiment 1 to Embodiment 5.

For example, the first reference picture and the second reference picture may be located temporally in the same direction or different directions based on the current picture.

Furthermore, if a current picture is a picture to which bi-directional inter-prediction is applied and two reference pictures for the current picture are present temporally in the same direction based on the current picture, one reference block of the two reference pictures may be substituted with a reference block of the second reference picture. In this case, a reference block of the second reference picture may be derived by temporally scaling any one motion vector of the two reference pictures for the current picture based on the current picture in different directions. 만일, if the two reference pictures for the current picture are different pictures, a reference block of a reference picture that belongs to the two reference pictures for the current picture and that has a greater POC difference than the current picture may be substituted with a reference block of the second reference picture.

In contrast, if a current picture is a picture to which unidirectional inter-prediction is applied, a reference picture of the current picture may be used as a first reference picture and a reference picture of the first reference picture may be used as a second reference picture. In this case, if the first reference picture is a picture to which bi-directional inter-prediction is applied, a reference picture that belongs to two reference pictures for the first reference picture and that has a smaller POC difference than the current picture may be used as the second reference picture.

The encoder/decoder derives a predictor for each pixel within the current block through (or by applying) inter-prediction of a pixel unit for each pixel within the current block based on the motion vector of the current block refined at step S1101 (S1202).

That is, the encoder/decoder derives a motion vector of a pixel unit for each pixel within the current block based on the refined motion vector of the current block, and derives a predictor for each pixel within the current block based on the derived motion vector of a pixel unit.

Steps S1102 and S1103 may be performed using the aforementioned methods of Embodiment 1 to Embodiment 5.

Furthermore, the predictor calculated in Embodiments 1 to 5 may be applied as follows. One of the following methods may be selected and used or one or more of the methods may be selected, combined and used.

Hereinafter, for convenience of description, the same description as that in the examples of FIGS. 11 and 12 is omitted.

- A predictor adopting an optical flow calculated for a current block may be used without any change. This is described with reference to the following drawing.

FIG. 13 is a diagram illustrating a method of processing an image based on inter-prediction according to an embodiment of the present invention.

The encoder/decoder determines whether a current slice (or picture) is a B slice (or picture) (S1301).

If, as a result of the determination at step S1301, the current slice (or picture) is a B slice (or picture), the encoder/decoder calculates (derives) gradients Ix and Iy using a motion vector for a current block derived from the block-based inter-prediction (S1302).

In this case, in the case of an x tab filter (in the case of FIG. 13, x=4 and a width W and height H are increased by 4 pixels), the encoder/decoder may calculate (derive) the gradients Ix and Iy in an interpolated reference picture.

The encoder/decoder interpolates the current block (S1303). As described above, the encoder/decoder may apply the x tab interpolation filter (in the case of FIG. 13, x=4 and a width W and height H are increased by 4 pixels) to the current block.

Steps S1302 and S1303 are repeatedly performed on an LO reference picture and an L1 reference picture.

The encoder/decoder calculates the refinement of the motion vector for the current block (S1305).

In this case, the encoder/decoder may refine the motion vector by scaling the motion vector for the current block derived from the block-based inter-prediction using the methods described in Embodiments 2 to 5.

The encoder/decoder calculates a predictor for each pixel within the current block through inter-prediction of a pixel unit (e.g., an optical flow) for each pixel within the current block based on the refined motion vector (S1306).

In this case, the encoder/decoder may calculate the predictor for each pixel within the current block using the methods described in Embodiments 2 to 5.

Furthermore, the encoder/decoder may identically use the predictor for each pixel derived by inter-prediction of a pixel unit as a predictor for the current block.

Meanwhile, if, as a result of the determination at step S1301, the current slice (or picture) is not a B slice (or picture), the encoder/decoder interpolates the current block (S1304).

Step S1304 is repeatedly performed on the L0 reference picture and an L1 reference picture.

The encoder/decoder calculates a predictor for the current block through the existing block-based inter-prediction method (S1307).

Furthermore, the encoder/decoder may use the predictor, derived by the block-based inter-prediction, as a predictor for the current block.

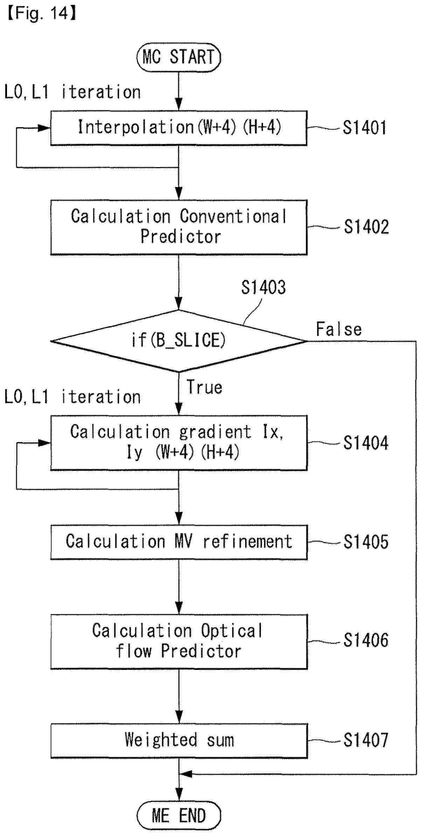

FIG. 14 is a diagram illustrating a method of processing an image based on inter-prediction according to an embodiment of the present invention.

Referring to FIG. 14, the encoder/decoder interpolates a current block (S1401).

As described above, the encoder/decoder may apply an x tab interpolation filter) (in the case of FIG. 14, x=4 and a width W and height H are increased by 4 pixels) to the current block.

Step S1401 is repeatedly performed on an L0 reference picture and an L1 reference picture.

The encoder/decoder calculates a predictor for the current block through the existing block-based inter-prediction method (S1402).

The encoder/decoder determines whether a current slice (or picture) is a B slice (or picture) (S1403).

If, as a result of the determination at step S1403, the current slice (or picture) is a B slice (or picture), the encoder/decoder calculates (derives) gradients Ix and Iy using a motion vector for the current block derived from the block-based inter-prediction (S1404).

Step S1404 is repeatedly performed on the L0 reference picture and the L1 reference picture.

The encoder/decoder calculates the refinement of the motion vector for the current block (S1405).

In this case, the encoder/decoder may refine the motion vector for the current block derived from the block-based inter-prediction using the methods described in Embodiments 2 to 5.

The encoder/decoder calculates a predictor for each pixel within the current block through inter-prediction of a pixel unit (e.g., an optical flow) for each pixel within the current block based on the refined motion vector (S1406).

In this case, the encoder/decoder may calculate the predictor for each pixel within the current block using the methods described in Embodiments 2 to 5.

The encoder/decoder generates the predictor for the current block by the weighted sum of a first predictor for the current block derived by the block unit inter-prediction at step S1402 and a second predictor derived based on the motion vector of a pixel unit at step S1406 (S1407).

In this case, the encoder/decoder may perform the weighted sum of the first predictor generated as an average value of $P^{(0)}$ and $P^{(1)}$ for the current block derived by the block unit inter-prediction and the second predictor derived based on the motion vector of a pixel unit.

In this case, the weighting factor of the weighted sum may be differently determined as a slice (or picture) or a block unit.

Furthermore, the weighting factor of the weighted sum may be determined by taking into consideration one or more of the distance between the current picture and a first reference picture/second reference picture (i.e., a POC difference), a difference between the two predictors (i.e., $P^{(0)}$ and $P^{(1)}$) generated by the block-based inter-prediction, and the similarity between the motion vector of the first reference picture and the motion vector of the second reference picture.

Furthermore, the encoder/decoder may independently determine the weighting factor of the weighted sum according to the same rule, but the encoder may determine the weighting factor of the weighted sum and provide it to the decoder.

Meanwhile, if, as a result of the determination at step S1403, the current slice (or picture) is not a B slice (or picture), the encoder/decoder uses the predictor derived by the block-based inter-prediction as a predictor for the current block.

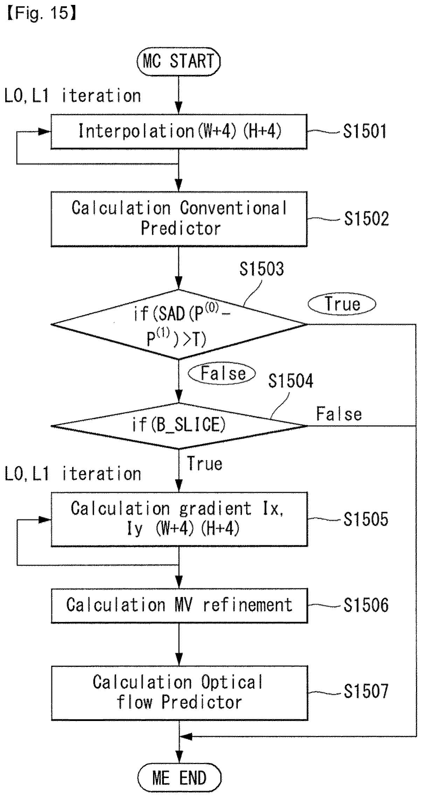

FIG. 15 is a diagram illustrating a method of processing an image based on inter-prediction according to an embodiment of the present invention.

Referring to FIG. 15, the encoder/decoder interpolates a current block (S1501).

As described above, the encoder/decoder may apply an x tab interpolation filter (in the case of FIG. 15, x=4, and a width W and height H are increased by 4 pixels) to the current block.

Step S1501 is repeatedly performed on an L0 reference picture and an L1 reference picture.

The encoder/decoder calculates a predictor for the current block through the existing block-based inter-prediction method (S1502).

The encoder/decoder determines whether a sum of absolute difference (SAD) between reference blocks $P^{(0)}$ and $P^{(1)}$ for the current block derived by the block unit inter-prediction (i.e., SAD($P^{(0)}$-$P^{(1)}$)) is greater than a predetermined threshold (S1503).

If, as a result of the determination at step S1503, the SAD between the reference blocks $P^{(0)}$ and $P^{(1)}$ for the current block is smaller than the predetermined threshold, the encoder/decoder determines whether the current slice (or picture) is a B slice (or picture) (S1504).

If, as a result of the determination at step S1504, the current slice (or picture) is a B slice (or picture), the encoder/decoder calculates (derives) gradients |x and ly using a motion vector for the current block derived from the block-based inter-prediction (S1505).

Step S1505 is repeatedly performed on an L0 reference picture and an L1 reference picture.

The encoder/decoder calculates the refinement of the motion vector for the current block (S1506).

In this case, the encoder/decoder may refine the motion vector by scaling the motion vector for the current block derived from the block-based inter-prediction using the methods described in Embodiments 2 to 5.

The encoder/decoder calculates a predictor for each pixel within the current block through inter-prediction of a pixel unit (e.g., an optical flow) for each pixel within the current block based on the refined motion vector (S1507).

In this case, the encoder/decoder may calculate the predictor for each pixel within the current block using the methods described in Embodiments 2 to 5.

Meanwhile, if, as a result of the determination at step S1503, the SAD between the reference blocks P^(0) and P^(1) for the current block is greater than the predetermined threshold or if, as a result of the determination at step S1504, the current slice (or picture) is a B slice (or picture), the encoder/decoder uses the predictor derived by the block-based inter-prediction as a predictor for the current block.

That is, if the SAD between the reference blocks P^(0) and P^(1) is greater than the threshold, a predictor to which an optical flow has been is not used because the assumption that a corresponding value is not changed when an object moves within a short time is violated.

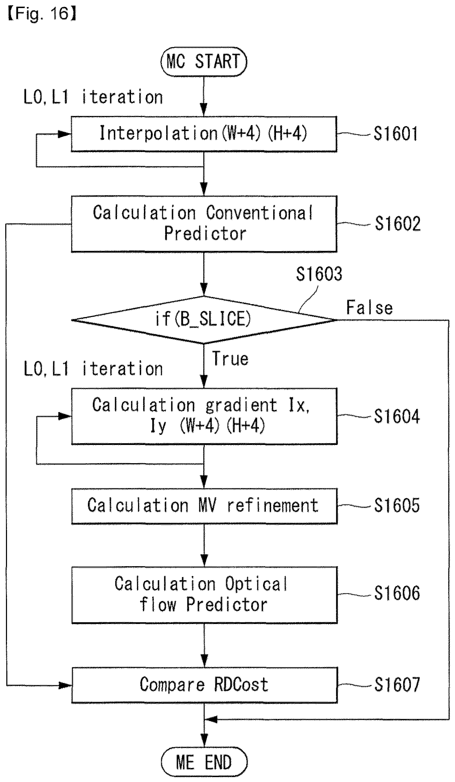

FIG. 16 is a diagram illustrating a method of processing an image based on inter-prediction according to an embodiment of the present invention.

Referring to FIG. 16, the encoder interpolates a current block (S1601).

As described above, the encoder may apply an x tab interpolation filter (in the case of FIG. 16, x=4, and a width W and height H are increased by 4 pixels) to the current block.

Step S1601 is repeatedly performed on an L0 reference picture and an L1 reference picture.

The encoder calculates a predictor for the current block through the existing block-based inter-prediction method (S1602).

The encoder determines whether a current slice (or picture) is a B slice (or picture) (S1603).

If, as a result of the determination at step S1603, the current slice (or picture) is a B slice (or picture), the encoder calculates (derives) gradients Ix and ly using a motion vector for the current block derived from the block-based inter-prediction (S1604).

Step S1604 is repeatedly performed on the L0 reference picture and the L1 reference picture.

The encoder calculates the refinement of the motion vector for the current block (S1605).

In this case, the encoder may refine the motion vector by scaling the motion vector for the current block derived from the block-based inter-prediction using the methods described in Embodiments 2 to 5.

The encoder calculates a predictor for each pixel within the current block through inter-prediction of a pixel unit (e.g., an optical flow) for each pixel within the current block based on the refined motion vector (S1606).

In this case, the encoder may calculate the predictor for each pixel within the current block using the methods described in Embodiments 2 to 5.

The encoder calculates a rate-distortion cost (RD cost) between a case where inter-prediction of a block unit (e.g., CU or PU unit) for the current block has been applied and a case where inter-prediction of a pixel unit (e.g., an optical flow) has been applied, and determines whether to apply the inter-prediction of a pixel unit (S1607).

Furthermore, the encoder may signal information about whether to apply the inter-prediction of a pixel unit to the decoder through a bit stream.

- Meanwhile, in order to refine a predictor between views, a pixel value may be indicated as I(x, y, v) and applied according to the methods of Embodiments 1 to 5.

In the aforementioned embodiments, the elements and characteristics of the present invention have been combined in specific forms. Each of the elements or characteristics may be considered to be optional unless otherwise described explicitly. Each of the elements or characteristics may be implemented in a form in which it is not combined with other elements or characteristics. Furthermore, some of the elements and/or the characteristics may be combined to form an embodiment of the present invention. Order of the operations described in the embodiments of the present invention may be changed. Some of the elements or characteristics of an embodiment may be included in another embodiment or may be replaced with corresponding elements or characteristics of another embodiment. It is evident that an embodiment may be configured by combining claims not having an explicit citation relation in the claims or may be included as a new claim by amendments after filing an application.

The embodiment according to the present invention may be implemented by various means, for example, hardware, firmware, software or a combination of them. In the case of an implementation by hardware, the embodiment of the present invention may be implemented using one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In the case of an implementation by firmware or software, the embodiment of the present invention may be implemented in the form of a module, procedure or function for performing the aforementioned functions or operations. Software code may be stored in memory and driven by the processor. The memory may be located inside or outside the processor and may exchange data with the processor through a variety of known means.

The detailed description should not be construed as being limitative from all aspects, but should be construed as being illustrative. The scope of the present invention should be determined by reasonable analysis of the attached claims.

[Industrial Applicability]

The aforementioned preferred embodiments of the present invention have been disclosed for illustrative purposes. They are not meant to be limiting, as the scope of the present invention is defined by the attached claims.

**Claims**

1. A method of processing an image based on inter-prediction, comprising steps of:

   obtaining a first motion vector (921) of a current block (911) to which uni-directional inter-prediction using a single reference picture is applied, the first motion vector (921) indicating a first reference block (A) in a first reference picture (920),
   obtaining a second motion vector of the first reference block, the second motion vector indicating a second reference block in a second reference picture (930);
   determining a scale factor based on a ratio of a difference between a Picture Order Count, POC, of a current picture including the current block and a POC of the first reference picture and a difference between a POC of the current picture and the POC of the second reference picture;
   determining a scaled motion vector for each pixel within the current block to minimize a square of a pixel value difference of two corresponding pixels respectively included in the first and second reference blocks by using an optical flow method in consideration of the scale factor;
   deriving a predictor for the each pixel within the current block based on the scaled motion vector.

2. The method of claim 1, wherein when inter-prediction using bi-predictive pictures is applied to the first reference block, one of two reference blocks of the first reference block is selected as the second reference block.

3. The method of claim 2, wherein, among the two reference blocks one reference block included in a reference picture closer to the current picture among two reference pictures for the first reference block is selected as the second reference block.

4. The method of claim 2 or 3, wherein when two reference pictures for the first reference block are same in their difference from the current picture, among the two reference blocks one reference block included in a reference picture located in a predetermined direction from the current picture among the two reference pictures for the first reference block is selected as the second reference block.

5. The method of claim 1, further comprising a step of generating a predictor for the current block by a weighted sum of the predictor of each pixel and a predictor generated by block-based inter-prediction for the current block.

6. The method of claim 1, further comprising a step of determining whether to apply the inter-prediction of a pixel unit to the current block.

7. The method of claim 6, wherein if a difference between two predictors generated by a block-based inter-prediction method for the current block exceeds a threshold, the inter-prediction of a pixel unit is not applied to the current block.

8. An apparatus for processing an image based on inter-prediction, comprising:
   a processor configured to:

obtain a first motion vector (921) of a current block (911) to which uni-directional inter-prediction using a single reference picture is applied, the first motion vector (921) indicating a first reference block (A) in a first reference picture (920),

obtain a second motion vector of the first reference block, the second motion vector indicating a second reference block in a second reference picture (930);

determine a scale factor based on a ratio of a difference between a Picture Order Count, POC, of a current picture including the current block and a POC of a first reference picture and a difference between a POC of the current picture and the POC of a second reference picture;

determine a scaled motion vector for each pixel within the current block to minimize a square of a pixel value difference of two corresponding pixels respectively included in the first and second reference blocks by using an optical flow method in consideration of the scale factor; and

derive a predictor for the each pixel within the current block based on the scaled motion vector of the current block.

## Patentansprüche

1. Verfahren zum Verarbeiten eines Bilds basierend auf Interprädiktion, umfassend die Schritte:

Erhalten eines ersten Bewegungsvektors (921) eines aktuellen Blocks (911), auf den eine unidirektionale Interprädiktion unter Verwendung eines einzelnen Referenzbilds angewendet wird, wobei der erste Bewegungsvektor (921) einen ersten Referenzblock (A) in einem ersten Referenzbild (920) angibt,

Erhalten eines zweiten Bewegungsvektors des ersten Referenzblocks, wobei der zweite Bewegungsvektor einen zweiten Referenzblock in einem zweiten Referenzbild (930) angibt;

Bestimmen eines Skalierungsfaktors basierend auf einem Verhältnis einer Differenz zwischen einem Bildreihenfolgezähler, POC, eines aktuellen Bilds, das den aktuellen Block enthält, und einem POC des ersten Referenzbilds und einer Differenz zwischen einem POC des aktuellen Bilds und dem POC des zweiten Referenzbilds;

Bestimmen eines skalierten Bewegungsvektors für jedes Pixel innerhalb des aktuellen Blocks, um ein Quadrat einer Pixelwertdifferenz von zwei entsprechenden Pixeln, die jeweils in dem ersten und zweiten Referenzblock enthalten sind, zu minimieren, indem ein optisches Flussverfahren unter Berücksichtigung des Skalierungsfaktors verwendet wird; und

Ableiten eines Prädiktors für jedes Pixel innerhalb des aktuellen Blocks basierend auf dem skalierten Bewegungsvektor.

2. Verfahren nach Anspruch 1, wobei, wenn eine Interprädiktion unter Verwendung biprädiktiver Bilder auf den ersten Referenzblock angewendet wird, einer von zwei Referenzblöcken des ersten Referenzblocks als der zweite Referenzblock ausgewählt wird.

3. Verfahren nach Anspruch 2, wobei unter den zwei Referenzblöcken ein Referenzblock, der in einem Referenzbild, das näher am aktuellen Bild liegt, unter zwei Referenzbildern für den ersten Referenzblock enthalten ist, als der zweite Referenzblock ausgewählt wird.

4. Verfahren nach Anspruch 2 oder 3, wobei, wenn zwei Referenzbilder für den ersten Referenzblock in ihrer Differenz vom aktuellen Bild gleich sind, unter den zwei Referenzblöcken ein Referenzblock, der in einem Referenzbild, das in einer vorgegebenen Richtung vom aktuellen Bild angeordnet ist, unter den zwei Referenzbildern für den ersten Referenzblock enthalten ist, als der zweite Referenzblock ausgewählt wird.

5. Verfahren nach Anspruch 1, weiterhin umfassend einen Schritt zum Erzeugen eines Prädiktors für den aktuellen Block durch eine gewichtete Summe des Prädiktors jedes Pixels und eines durch blockbasierte Interprädiktion für den aktuellen Block erzeugten Prädiktors.

6. Verfahren nach Anspruch 1, weiterhin umfassend einen Schritt zum Bestimmen, ob die Interprädiktion einer Pixeleinheit auf den aktuellen Block angewendet werden soll.

7. Verfahren nach Anspruch 6, wobei, wenn eine Differenz zwischen zwei durch ein blockbasiertes Interprädiktionsverfahren für den aktuellen Block erzeugten Prädiktoren einen Schwellenwert überschreitet, die Interprädiktion einer Pixeleinheit nicht auf den aktuellen Block angewendet wird.

**8.** Vorrichtung zum Verarbeiten eines Bilds basierend auf Interprädiktion, umfassend:
einen Prozessor, der eingerichtet ist zum:

Erhalten eines ersten Bewegungsvektors (921) eines aktuellen Blocks (911), auf den eine unidirektionale Interprädiktion unter Verwendung eines einzelnen Referenzbilds angewendet wird, wobei der erste Bewegungsvektor (921) einen ersten Referenzblock (A) in einem ersten Referenzbild (920) angibt,

Erhalten eines zweiten Bewegungsvektors des ersten Referenzblocks, wobei der zweite Bewegungsvektor einen zweiten Referenzblock in einem zweiten Referenzbild (930) angibt;

Bestimmen eines Skalierungsfaktors basierend auf einem Verhältnis einer Differenz zwischen einem Bildreihenfolgezähler, POC, eines aktuellen Bilds, das den aktuellen Block enthält, und einem POC eines ersten Referenzbilds und einer Differenz zwischen einem POC des aktuellen Bilds und dem POC eines zweiten Referenzbilds;

Bestimmen eines skalierten Bewegungsvektors für jedes Pixel innerhalb des aktuellen Blocks, um ein Quadrat einer Pixelwertdifferenz von zwei entsprechenden Pixeln, die jeweils in dem ersten und zweiten Referenzblock enthalten sind, zu minimieren, indem ein optisches Flussverfahren unter Berücksichtigung des Skalierungsfaktors verwendet wird; und

Ableiten eines Prädiktors für jedes Pixel innerhalb des aktuellen Blocks basierend auf dem skalierten Bewegungsvektor des aktuellen Blocks.

**Revendications**

**1.** Procédé de traitement d'une image basé sur la prédiction inter, comprenant les étapes consistant à:

obtenir un premier vecteur de mouvement (921) d'un bloc actuel (911) auquel s'applique la prédiction inter unidirectionnelle à l'aide d'une seule image de référence, le premier vecteur de mouvement (921) indiquant un premier bloc de référence (A) dans une première image de référence (920),

obtenir un second vecteur de mouvement du premier bloc de référence, le second vecteur de mouvement indiquant un second bloc de référence dans une seconde image de référence (930);

déterminer un facteur d'échelle basé sur le rapport entre la différence entre le numéro d'ordre d'images, POC, d'une image actuelle comprenant le bloc actuel et un POC de la première image de référence, et une différence entre le POC de l'image actuelle et le POC de la seconde image de référence;

déterminer un vecteur de mouvement mis à échelle pour chaque pixel du bloc actuel afin de réduire au minimum un carré d'une différence de valeur de pixel de deux pixels correspondants respectivement inclus dans le premier et le second bloc de référence à l'aide d'un procédé de flux optique en tenant compte du facteur d'échelle;

établir un prédicteur pour chaque pixel du bloc actuel sur la base du vecteur de mouvement mis à l'échelle.

**2.** Procédé selon la revendication 1, dans lequel lorsque la prédiction inter à l'aide d'images bi-prédictives est appliquée au premier bloc de référence, l'un des deux blocs de référence du premier bloc de référence est sélectionné comme second bloc de référence.

**3.** Procédé selon la revendication 2, dans lequel, parmi les deux blocs de référence, un bloc de référence inclus dans une image de référence plus proche de l'image actuelle parmi deux images de référence pour le premier bloc de référence est sélectionné comme second bloc de référence.

**4.** Procédé selon la revendication 2 ou 3, dans lequel, lorsque deux images de référence pour le premier bloc de référence sont identiques dans leur différence par rapport à l'image actuelle, parmi les deux blocs de référence, un bloc de référence inclus dans une image de référence située dans une direction prédéterminée par rapport à l'image actuelle parmi les deux images de référence pour le premier bloc de référence est sélectionné en tant que second bloc de référence.

**5.** Procédé selon la revendication 1, comprenant en outre une étape consistant à générer un prédicteur pour le bloc actuel par une somme pondérée du prédicteur de chaque pixel et d'un prédicteur généré par prédiction inter basée sur les blocs pour le bloc actuel.

**6.** Procédé selon la revendication 1, comprenant en outre une étape consistant à déterminer s'il faut appliquer la prédiction inter d'une unité de pixel au bloc actuel.

**7.** Procédé selon la revendication 6, dans lequel si une différence entre deux prédicteurs générés par un procédé de prédiction inter basée sur les blocs pour le bloc actuel dépasse un seuil, la prédiction inter d'une unité de pixel n'est pas appliquée au bloc actuel.

**8.** Appareil de traitement d'une image basé sur la prédiction inter, comprenant:
un processeur configuré pour:

obtenir un premier vecteur de mouvement (921) d'un bloc actuel (911) auquel s'applique la prédiction inter unidirectionnelle à l'aide d'une seule image de référence, le premier vecteur de mouvement (921) indiquant un premier bloc de référence (A) dans une première image de référence (920),
obtenir un second vecteur de mouvement du premier bloc de référence, le second vecteur de mouvement indiquant un second bloc de référence dans une seconde image de référence (930);
déterminer un facteur d'échelle basé sur le rapport entre la différence entre le numéro d'ordre d'images, POC, d'une image actuelle comprenant le bloc actuel et un POC d'une première image de référence, et une différence entre le POC de l'image actuelle et le POC d'une seconde image de référence;
déterminer un vecteur de mouvement mis à échelle pour chaque pixel du bloc actuel afin de réduire au minimum un carré d'une différence de valeur de pixel de deux pixels correspondants respectivement inclus dans le premier et le second bloc de référence à l'aide d'un procédé de flux optique en tenant compte du facteur d'échelle; et
établir un prédicteur pour chaque pixel du bloc actuel sur la base du vecteur de mouvement mis à l'échelle.

【DRAWINGS】

【Fig. 1】

【Fig. 2】

DECODER (200)

BIT STREAM → ENTROPY DECODING UNIT (210) → DEQUANTIZATION UNIT (220) → INVERSE TRANSFORM UNIT (230) → 235 (+) → FILTERING UNIT (240) → RECONSTRUCTED IMAGE

DPB (250)

PREDICTION UNIT (260)

INTRA-PREDICTION UNIT (262)

INTER-PREDICTION UNIT (261)

【Fig. 3】

Depth = 0

Depth = 1

Depth = 2

Depth = 3

(a)

(b)

【Fig. 4】

Intra:

2Nx2N          NxN

Inter:

2Nx2N          NxN          2NxN          Nx2N

nLx2N          nRx2N          2NxnU          2NxnD

【Fig. 5】

【Fig. 6】

【Fig. 7】

【Fig. 8】

【Fig. 9】

【Fig. 10】

【Fig. 11】

【Fig. 12】

```
           ┌─────────────┐
           (    Start    )
           └──────┬──────┘
                  │
                  ▼
  ┌──────────────────────────────────┐
  │  Refine motion vector for current │
  │  block at distance ratio of current│      ~1201
  │  picture and first reference picture/│
  │       second reference picture    │
  └──────────────────┬───────────────┘
                     │
                     ▼
  ┌──────────────────────────────────┐
  │  Derive motion vector of pixel unit│
  │  for each pixel within current block│
  │    based on refined motion vector  │      ~1202
  │         of current block          │
  └──────────────────┬───────────────┘
                     │
                     ▼
           ┌─────────────┐
           (     End     )
           └─────────────┘
```

36

【Fig. 13】

【Fig. 14】

【Fig. 15】

【Fig. 16】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALSHINA E et al.** Known tools performance investigation for next generation video coding. *52. VCEG MEETING; 19-26 June 2015; WARSAW; (VIDEO CODING EXPERTS GROUP OF ITU-T SG.16),* 25 June 2015, (VCEG-AZ05_r1

- **ALSHIN A et al.** Bi-directional optical flow. *3. JCT-VC MEETING; 94. MPEG MEETING; 7-15 Oct. 2010; GUANGZHOU; (JOINT COLLABORATIVE TEAM ON VIDEO CODING OF ISO/IEC JTC1/SC29/WG11 AND ITU-T SG.16),* 03 October 2010, HTTP://WFTP3.ITU.INT/AV-ARCH/JCTVC-S, no. JCTVC-C204